# EUROPEAN PATENT SPECIFICATION

(11) **EP 4 148 319 B1**
(45) Date of publication and mention of the grant of the patent: **29.10.2025**
(21) Application number: 20935709.4
(22) Date of filing: 27.09.2020
(51) Int. Cl.: F17C 13/00, F16L 27/08, F16F 15/28, G06Q 10/04, G06Q 10/20

(54) **LNG LARGE-CALIBER SHORE-BASED INTELLIGENT LOADING AND UNLOADING SYSTEM**
INTELLIGENTES LADE- UND ENTLADESYSTEM AUF LNG-GROSSKALIBER-SHORE-BASIS
SYSTÈME INTELLIGENT DE CHARGEMENT ET DE DÉCHARGEMENT À QUAI DE GNL À GRANDE ÉCHELLE

(30) Priority: 09.05.2020 CN 202010385980
(43) Date of publication of application: 15.03.2023
(73) Proprietor: Jiangsu Automation Research Institute, Lianyungang, Jiangsu 222061 (CN)
(72) Inventor: LIU, Zhicheng, Lianyungang, Jiangsu 222061 (CN); ZHOU, Xinhua, Lianyungang, Jiangsu 222061 (CN); MENG, Fanhao, Lianyungang, Jiangsu 222061 (CN); SHI, Chao, Lianyungang, Jiangsu 222061 (CN); HU, Xujie, Lianyungang, Jiangsu 222061 (CN); MIAO, Zeng, Lianyungang, Jiangsu 222061 (CN); GU, Shuguang, Lianyungang, Jiangsu 222061 (CN); YAO, Guichang, Lianyungang, Jiangsu 222061 (CN); CHEN, Yiming, Lianyungang, Jiangsu 222061 (CN); ZHANG, Qi, Lianyungang, Jiangsu 222061 (CN); TIAN, Jing, Lianyungang, Jiangsu 222061 (CN); QIU, Beibei, Lianyungang, Jiangsu 222061 (CN); CAO, Li, Lianyungang, Jiangsu 222061 (CN)
(74) Representative: Nederlandsch Octrooibureau
(86) International application number: PCT/CN2020/117976
(87) International publication number: WO 2021/227337

(56) References cited:
- CN-A- 103 899 915
- CN-A- 105 323 111
- CN-A- 107 790 987
- CN-A- 110 278 102
- CN-A- 111 664 354
- CN-A- 111 694 285
- CN-U- 203 784 631
- CN-U- 207 361 784
- CN-U- 207 361 784
- CN-U- 207 386 981
- JP-A- 2017 019 540

## Description

### TECHNICAL FIELD

The present invention belongs to the technical field of LNG safe and rapid loading and unloading, and more particularly relates to an LNG large-caliber shore-based intelligent loading and unloading system.

### BACKGROUND

Liquefied natural gas (LNG) is a clean and high-efficiency energy. Importing LNG helps energy-consuming countries to diversify energy supply and ensure energy security, while exporting LNG helps natural gas producing countries to effectively develop natural gas resources, increase foreign exchange income, and promote national economic development, so LNG trade is becoming a new hot spot in the global energy market. At present, an LNG large-caliber shore-based loading and unloading system for domestic LNG terminals is completely monopolized by foreign companies. The problems of high equipment price, long delivery period, untimely service and high service cost have restricted the construction and security operation and maintenance of the domestic terminals and the healthy development of LNG industry to a certain degree. At the same time, foreign products have the disadvantages of excessive dependence on manual engagement operation, high labor intensity, low engagement efficiency, and low degree of automation and intelligence.

Chinese patent CN203784631U discloses an LNG loading and unloading apparatus for an overwater natural gas filling station, and specifically discloses that the loading and unloading apparatus includes an LNG loading and unloading arm, an LNG storage tank, an LNG hose, and a power distribution system of the whole apparatus, all arranged on a deck. However, intelligent loading and unloading is not disclosed. The automation and intelligence levels of the apparatus are not high, and the loading and unloading arm cannot well maintain the gravity balance at all rotation positions. There is an unbalanced inertial force in the movement of the system, the load of a driving mechanism is relatively large, and the system movement stability is average. Chinese patent CN110675659A discloses a ship management and control platform and a method of using the same, and specifically discloses that the management and control platform includes a ship AIS system, an input module, a radar signal processing module, a communication module, an early warning module, a monitoring submodule, and a processor. However, the effective combination of the management and control platform and the loading and unloading process of the loading and unloading arm has not been disclosed. CN207361784U discloses a shore-based intelligent loading and unloading system, comprising a loading and unloading arm with a management and control platform using computer vision, emergency disengagement device, real-time monitoring/management which displays safety and maintenance related data and which can also provide the operator with maintenance and replacement tips but does not predict future security/maintenance data to formulate a plan therefore. In conclusion, there is no research on a complete intelligent LNG loading and unloading system.

### SUMMARY

An objective of the present invention is to provide an LNG large-caliber shore-based intelligent loading and unloading system that enables automatic engagement and real-time online management and control on the whole LNG loading and unloading process.

A technical solution for achieving the objective of the present invention is: an LNG large-caliber shore-based intelligent loading and unloading system. The system includes a loading and unloading arm and a 3D intelligent management and control platform, where
the loading and unloading arm is configured for implementing automatic engagement and emergency disengagement between an LNG ship and an LNG passage at LNG terminal storage tanks; and
the 3D intelligent management and control platform is configured for implementing real-time online management and control on a loading and unloading process of the loading and unloading arm, where the management and control platform includes a security operation and maintenance predicting subsystem, configured for predicting future security data of each component according to historical security data of each component in a working environment of the loading and unloading arm, formulating and implementing a security operation and maintenance plan according to the predicted security data, and displaying the predicted security data, the security operation and maintenance plan and the security operation and maintenance result.

Further, the loading and unloading arm includes an upright column, a trunnion box, an inner arm, an outer arm, a low-temperature pipeline system and a counterweight system, where a lower end of the inner arm is connected to the upright column through the trunnion box; the trunnion box is connected to the upright column through a first slewing support; the inner arm is connected to the trunnion box through a second slewing support; the low-temperature pipeline system includes a plurality of low-temperature rotating connectors capable of 360° rotation, an emergency disengagement device capable of active separation, a rapid connection device and a connecting pipeline, where
the stainless steel connecting pipeline passes through the upright column and is connected to the emergency disengagement device and the rapid connection device sequentially through the inner arm and the outer arm; an elbow is arranged between connecting pipelines of the upright column and the inner arm; a lower end of the elbow and a pipeline arranged in the upright column are connected through a first low-temperature rotating connector, and an upper end of the elbow and the pipeline of the inner arm are connected through a second low-temperature rotating connector; the first low-temperature rotating connector and the first slewing support have a same rotating center, and the second low-temperature rotating connector and the second slewing support have a same rotating center; a rotary driving device is arranged between the trunnion box and the upright column, and the rotary driving device is configured for driving rotary motion of the trunnion box relative to the upright column; an inner arm swinging mechanism is arranged between the inner arm and the trunnion box and configured for driving rotation of the inner arm relative to the trunnion box; the outer arm is connected to the inner arm through a third slewing support; a third low-temperature rotating connector is arranged between connecting pipelines of the outer arm and the inner arm; the third low-temperature rotating connector and the third slewing support have a same rotating center; a pipeline at the front end of an outer arm is sequentially connected to a fourth low-temperature rotating connector, a fifth low-temperature rotating connector, the emergency disengagement device, a sixth low-temperature rotating connector and the rapid connection device; three low-temperature rotating connectors, the emergency disengagement device and the rapid connection device form a three-dimensional connector at the front end of the outer arm; and the counterweight system is arranged between the inner arm and the outer arm, and the counterweight system makes a plane of symmetry of a counterweight always be parallel to a plane of symmetry of the outer arm.

Further, the 3D intelligent management and control platform further includes a three-dimensional visual management subsystem, a visual recognition positioning subsystem and an automatic engagement subsystem, where
the three-dimensional visual management subsystem is configured for displaying an image and data information of a loading and unloading arm operation environment in real time, and is further configured for displaying a three-dimensional model of the loading and unloading arm operation environment and implementing linkage between the three-dimensional model and an actual loading and unloading arm operation environment;
the visual recognition positioning subsystem is configured for positioning position and posture information of a target flange on a ship, and is further configured for detecting an obstacle in the moving process of the loading and unloading arm and transferring the position and posture information and obstacle information to the automatic engagement subsystem; and
the automatic engagement subsystem is configured for resolving the position and posture information and obstacle information of the target flange on the ship, acquiring a motion trajectory and a required motion angle value of each joint of the marine loading and unloading arm for implementing engagement between the engagement flange of the loading and unloading arm and the target flange on the ship, and transferring the motion trajectory and angle value information to a motion control mechanism of the loading and unloading arm.

Compared with the prior art, the present invention has the following significant advantages: 1) by means of vision-based automatic engagement and real-time intelligent management and control, the automation and intelligence levels of the LNG large-caliber shore-based loading and unloading system are greatly improved; 2) the loading and unloading arm maintains gravity balance at all rotation positions, thereby greatly reducing an unbalanced inertia force in movement of the system, reducing the load of a driving mechanism, and improving the movement stability of the system; and 3) the 3D intelligent management and control platform solves the problems that a loading and unloading arm management and control platform for a ship at a wharf is weak in function, single in system, dispersed in management, scattered in data management, poor in visual display capability, lack of 3D vision-based accurate imaging and intelligent automatic engagement, low in loading and unloading operation efficiency, etc.

The present invention is further described in detail below with reference to the accompanying drawings.

### BRIEF DESCRIPTION OF THE DRAWINGS

FIG 1 is a schematic diagram of a structure of an LNG large-caliber shore-based intelligent loading and unloading system according to an embodiment;
FIG 2 is a schematic diagram of an overall structure of a loading and unloading arm according to an embodiment;
FIG 3 is a simple schematic diagram of a mechanism principle of a loading and unloading arm according to an embodiment;
FIG 4 is a side view of connection of a counterweight sheave according to an embodiment;
FIG 5 is a partial enlarged diagram in FIG 2 according to an embodiment;
FIG 6 is a schematic diagram of connection of an inner arm according to an embodiment;
FIG 7 is a schematic diagram of a structure of a rotary driving device, an inner arm swinging mechanism and an outer arm swinging mechanism according to an embodiment;
FIG 8 is a schematic diagram of a structure of a low-temperature rotating connector according to an embodiment;
FIG 9 is a schematic diagram of a structure of an emergency disengagement device according to an embodiment;
FIG 10 is a front view of a structure of an emergency disengagement device according to an embodiment;
FIG 11 is a front exploded view of an emergency disengagement device with upper and lower connecting rods removed according to an embodiment;
FIG 12 is an enlarged diagram of an emergency disengagement device with a connecting rod and an upper-end rotating rocker being in contact according to an embodiment;
FIG 13 is a schematic diagram of a hydraulic system of an emergency disengagement device according to an embodiment;
FIG 14 is a schematic diagram of an overall structure of a rapid connection device according to an embodiment;
FIG 15 is a schematic diagram of connection between a pressing block and a screw rod according to an embodiment;
FIG 16 is an A-A sectional view of FIG 15 according to an embodiment;
FIG 17 is an architecture diagram of a 3D intelligent management and control platform according to an embodiment;
FIG 18 is a schematic diagram of a composition of a 3D intelligent management and control platform according to an embodiment;
FIG 19 is a schematic diagram of a composition of a three-dimensional visual management subsystem according to an embodiment;
FIG 20 is a flowchart of driving linkage of a model-based digital drive module according to an embodiment;
FIG 21 is a schematic diagram of a mounting position of each component of a visual recognition positioning subsystem according to an embodiment;
FIG 22 is a flowchart of automatic engagement and model linkage according to an embodiment; and
FIG 23 is a schematic diagram of a structure of a 3D intelligent management and control platform according to an embodiment.

### DETAILED DESCRIPTION OF THE EMBODIMENTS

To make the objectives, technical solutions, and advantages of the present application clearer, the present application is further described below in detail with reference to the accompanying drawings and embodiments. It should be understood that the specific embodiments described herein are merely configured for explaining the present application, and not intended for limiting the present application.

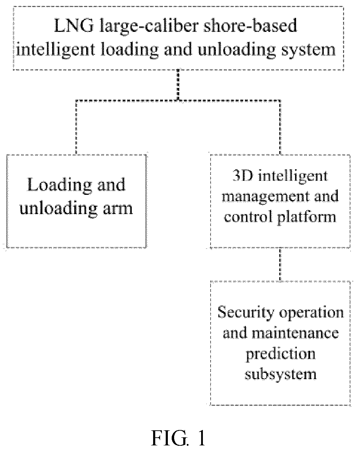

In an embodiment, referring to FIG 1, an LNG large-caliber shore-based intelligent loading and unloading system is provided. The system includes a loading and unloading arm and a 3D intelligent management and control platform, where
the loading and unloading arm is configured for implementing automatic engagement and emergency disengagement between an LNG ship and an LNG passage at LNG terminal storage tanks; and
the 3D intelligent management and control platform is configured for implementing real-time online management and control on a loading and unloading process of the loading and unloading arm, where the management and control platform includes a security operation and maintenance predicting subsystem, configured for predicting future security data of each component according to historical security data of each component in a working environment of the loading and unloading arm, formulating and implementing a security operation and maintenance plan according to the predicted security data, and displaying the predicted security data, the security operation and maintenance plan and the security operation and maintenance result.

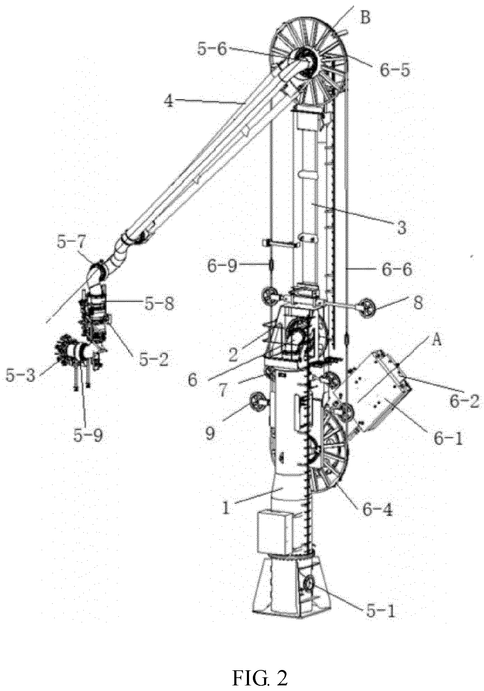

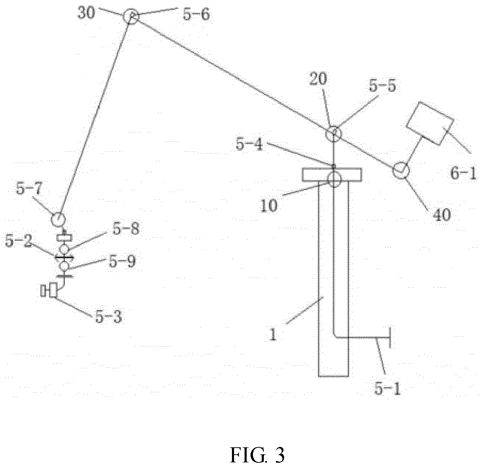

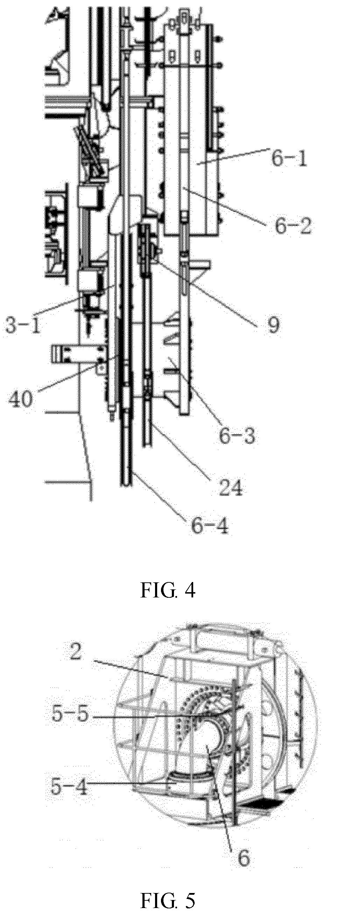

Further, in one embodiment, referring to FIG 2 to FIG 5, the loading and unloading arm includes an upright column 1, a trunnion box 2, an inner arm 3, an outer arm 4, a low-temperature pipeline system and a counterweight system, where a lower end of the inner arm 3 is connected to the upright column 1 through the trunnion box 2; the trunnion box 2 is rotatably connected to the upright column 1 through a first slewing support 10; the inner arm 3 is rotatably connected to the trunnion box 2 through a second slewing support 20; and the low-temperature pipeline system includes a plurality of low-temperature rotating connectors capable of 360° rotation, an emergency disengagement device 5-2 capable of active separation, a rapid connection device 5-3 and a stainless steel connecting pipeline 5-1.

Here, exemplarily, the low-temperature pipeline system is composed of six low-temperature rotating connectors capable of 360° rotation, an emergency disengagement device capable of active separation, a rapid connection device and a stainless steel connecting pipeline; and the rotating connector and the corresponding slewing support have a same rotating center. Three low-temperature rotating connectors capable of 360° rotation, an emergency disengagement device, a rapid connection device and a connecting pipe section form a three-dimensional connector at a front end of the low-temperature pipeline system, and the three-dimensional connector can maintain a balanced position under the action of gravity.

The stainless steel connecting pipeline 5-1 passes through the upright column 1 and is connected to the emergency disengagement device 5-2 and the rapid connection device 5-3 sequentially through the inner arm 3 and the outer arm 4; a 90-degree elbow 6 is arranged between connecting pipelines of the upright column 1 and the inner arm 3; a lower end of the 90-degree elbow 6 and a pipeline arranged in the upright column 1 are connected through a first low-temperature rotating connector 5-4, and an upper end of the 90-degree elbow 6 and the pipeline of the inner arm 3 are connected through a second low-temperature rotating connector 5-5; the first low-temperature rotating connector 5-4 and the first slewing support 10 have a same rotating center, and the second low-temperature rotating connector 5-5 and the second slewing support 20 have a same rotating center; a rotary driving device 7 is arranged between the trunnion box 2 and the upright column 1, and the rotary driving device 7 is configured for driving rotary motion of the trunnion box 2 relative to the upright column 1; an inner arm swinging mechanism 8 is arranged between the inner arm 3 and the trunnion box 2 and configured for driving rotation of the inner arm 3 relative to the trunnion box 2; the outer arm (4) is connected to the inner arm 3 through a third slewing support 30; a third low-temperature rotating connector 5-6 is arranged between connecting pipelines of the outer arm 4 and the inner arm 3; and the third low-temperature rotating connector and the third slewing support 30 have a same rotating center. A pipeline at the front end of an outer arm is sequentially connected to a fourth low-temperature rotating connector 5-7, a fifth low-temperature rotating connector 5-8, the emergency disengagement device 5-2, a sixth low-temperature rotating connector 5-9 and the rapid connection device 5-3. Three low-temperature rotating connectors, the emergency disengagement device 5-2 and the rapid connection device 5-3 form a three-dimensional connector at the front end of the outer arm. The three-dimensional connector can maintain a balanced position under the action of gravity. At this time, a connecting surface of the rapid connection device 5-3 is kept substantially perpendicular to a horizontal surface, and the deviation of an inclination angle does not exceed ±5°. A first bracket and a first pipe support are arranged in the upright column 1; a second pipe support is arranged on the inner arm 3; and a second bracket is arranged on an end portion of the outer arm 4 and is configured for fixing the stainless steel connecting pipeline 5-1.

Further, in one embodiment, referring to FIG 2, FIG 4 and FIG 5, the counterweight system includes a counterweight block 6-1, a guide plate 6-2, a roller 6-3, a counterweight sheave 6-4, an outer arm sheave 6-5, a steel wire rope 6-6 and a counterweight driving wheel 6-7;
the counterweight block 6-1 is sleeved on the guide plate 6-2, and a fixing position can be adjusted; the counterweight block 6-1 and the guide plate 6-2 form a counterweight assembly, and the guide plate 6-2 is fixedly connected to one end of the roller 6-3; the other end of the roller 6-3 is rotatably connected to a flange plate in a cross beam 3-1 fixed at the lower end of the inner arm 3 through a fourth slewing bearing 40; the counterweight sheave 6-4 is sleeved on the roller 6-3; the outer arm sheave 6-5 is connected to an outer ring of the fourth slewing support 40 through a flange plate; a steel wire rope 6-6 is connected between the counterweight sheave 6-4 and the outer arm sheave 6-5; the steel wire rope 6-6 is fixed on the counterweight sheave 6-4 and the outer arm sheave 6-5 through a slot buckle 6-8; spiral buckles 6-9 are arranged on the two steel wire ropes 6-6 and configured for adjusting the length of the steel wire rope 6-6; and in assembly, after a plane of symmetry A of the counterweight assembly and a plane of symmetry B of the outer arm 4 are adjusted in parallel position, the counterweight sheave 6-4 and the outer arm sheave 6-5 are connected through the steel wire rope 6-6, so that the counterweight sheave 6-4 and the outer arm sheave 6-5 are in synchronous linkage, and the plane of symmetry A of the counterweight assembly is always parallel to the plane of symmetry B of the outer arm 4 in the movement process. The outer arm 3-5 and the inner arm 3-6 maintain gravity balance at all rotation positions by adjusting the weight of the counterweight block 6-1 and the position of the counterweight block 6-1 on the counterweight guide plate 6-2, thereby greatly reducing an unbalanced inertia force in movement of the system, reducing the load of a driving mechanism, and improving the movement stability of the system.

An outer arm swinging mechanism 9 is arranged on the inner arm 3 and configured for driving rotation of the counterweight sheave 6-4 so as to drive the outer arm sheave 6-5. The outer arm sheave 6-5 rotates to drive rotation of the outer arm 4. In the synchronous linkage movement process of the counterweight sheave 6-4 and the outer arm sheave 6-5, the plane of symmetry A of the counterweight assembly is always parallel to the plane of symmetry B of the outer arm.

Here, according to the solution of this embodiment, the plane of symmetry of the counterweight assembly and the plane of symmetry of the outer arm are adjusted in parallel position, and the counterweight sheave and the outer arm sheave are connected through the steel wire rope, so that the counterweight assembly and the outer arm are in synchronous linkage, and the plane of symmetry of the counterweight assembly is always parallel to the plane of symmetry of the outer arm assembly in the movement process; and the outer arm assembly and the inner arm assembly can maintain gravity balance at all rotation positions by adjusting the weight of the counterweight block and the position of the counterweight block on the counterweight guide plate, thereby greatly reducing an unbalanced inertia force in movement of the system, reducing the load of a driving mechanism, and improving the movement stability of the system.

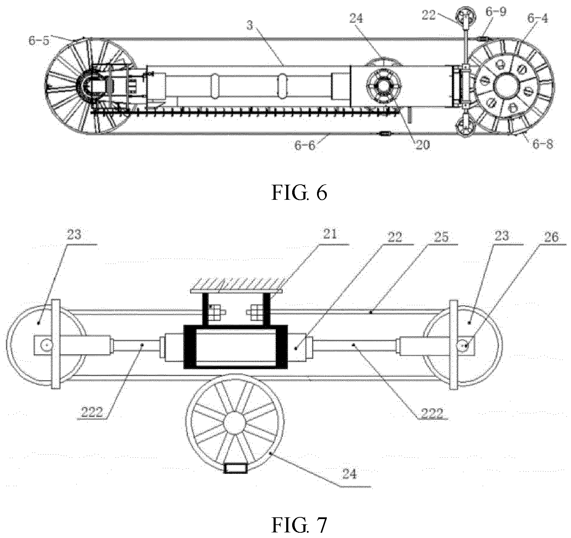

Further, in one embodiment, referring to FIG 7, the rotary driving device 7 includes a fixed base 21, a driving oil cylinder 22, movable pulleys 23, a driven sheave 24 and a driving steel wire rope 25, where the driving oil cylinder 22 is a double-acting hydraulic cylinder and is fixed on a trunnion box 2 through the fixed base 21; two ends of the driving oil cylinder 22 are connected to the movable pulleys 23 through a fork head 26; the driving steel wire rope 25 is connected to the fixed base 21 at one end, then goes around the movable pulley 23 at one end by a semicircle, around the driven sheave 24 by one circle and then around the movable pulley 23 at the other end by a semicircle, and then is fixed to the fixed base 21 at the other end; the driven sheave 24 is connected to an outer ring of the first slewing support 10 through a flange; a power transmission route of the rotary driving device is: the driving oil cylinder → the movable pulleys → the driving steel wire rope → the driven sheave; and taking the case where the movable pulleys 23 are driven to rotate clockwise as an example, the working flow of the driving device is: as shown in FIG 6, a right piston rod 222 in the driving oil cylinder 22 extends rightwards, the right movable pulley 23 translates rightwards with the piston rod 222, the movable pulley 23 rotates counterclockwise around the fork head 26 through a rotating shaft, and the right driving steel wire rope 25 is lengthened, so that the driven sheave 24 rotates clockwise. Similarly, the counterclockwise rotation process of the driven sheave 24 can be obtained. The driven sheave 24 rotates to drive rotary motion of the trunnion box 2 relative to the upright column 1.

Further, in one embodiment, the driving principle of the inner arm swinging mechanism 8 is the same as that of the rotary driving device 7, and the inner arm swinging mechanism 8 is also provided with a fixed base 21, a driving oil cylinder 22, movable pulleys 23, a driven sheave 24 and a driving steel wire rope 25. The difference is that: the driven sheave 24 of the inner arm swinging mechanism 8 is connected to the outer ring of the second slewing support 20 to drive rotation of the inner arm 3 relative to the trunnion box 2.

Further, in one embodiment, the driving principle of the outer arm swinging mechanism 9 is the same as that of the rotary driving device 7, and the outer arm swinging mechanism 9 is also provided with a fixed base, a driving oil cylinder, movable pulleys, a driven sheave and a driving steel wire rope. The difference is that: the fixed base of the outer arm swinging mechanism is fixed on the inner arm 3, and the driven sheave of the outer arm swinging mechanism is sleeved on the roller 6-3; and the driven sheave rotates to drive rotation of the roller 6-3, the roller 6-3 rotates to drive rotation of the counterweight sheave 6-4, the counterweight sheave 6-4 rotates to drive rotation of the outer arm sheave 6-5, and the outer arm sheave 6-5 rotates to drive rotation of the outer arm 4 around a third slewing support 30.

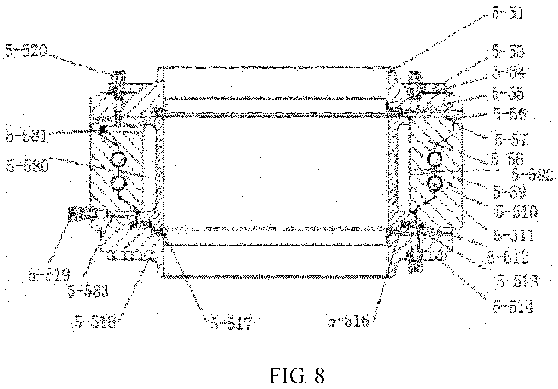

Further, in one embodiment, referring to FIG 8, the low-temperature rotating connector includes an inner ring flange 5-51, an inner ring 5-58, an outer ring 5-59, an outer ring flange 5-518, balls 5-511, replaceable slideways 5-510, a first medium flow-blocking ring 5-54 and a second medium flow-blocking ring 5-517;
the inner ring flange 5-51 is fixedly connected to an upper end of the inner ring 5-58 through a bolt 5-53, and a first static sealing device 5-55 and a second static sealing device 5-56 are arranged between contact end faces of the inner ring flange 5-51 and the inner ring 5-58; the first static sealing device 5-55 is close to an inner side of the contact end face and configured for sealing a medium, and the second static sealing device 5-56 is closed to an outer side of the contact end face and configured for nitrogen sealing on a gap between the inner ring 5-58 and the outer ring 5-59; the outer ring 5-59 is sleeved outside the inner ring 5-58, an annular slideway fixing groove is formed between the outer ring 5-59 and the inner ring 5-58, the replaceable slideways 5-510 are fixed in the slideway fixing grooves of the outer ring 5-59 and the inner ring 5-58, and the two replaceable slideways 5-510 with semicircular cross sections form a circular slideway with a circular cross section; a plurality of balls 5-511 are arranged in the circular slideway composed of the two replaceable slideways 5-510, so that the outer ring 5-59 is slidable relative to the inner ring 5-58 so as to achieve a dynamic rotation function of the rotating connector; the replaceable slideway 5-510 has a structural mechanical property that is superior to that of the corresponding one of the inner ring 5-58 and the outer ring 5-59 and has good wear resistance, thereby ensuring the service life of the inner ring and the outer ring and the use reliability of the rotating connector, and reducing the maintenance cost and time of the rotating connector; a dynamic moisture sealing device 5-57 is arranged between contact end faces of the outer ring 5-59 and the inner ring flange 5-51 so as to prevent moisture and dust from entering the gap between the outer ring 5-59 and the inner ring flange 5-51; the outer ring flange 5-518 is fixedly connected to the lower end of the outer ring 5-59 through a bolt 5-514; a third static sealing device 5-512 is arranged between contact end faces of the outer ring flange 5-518 and the outer ring 5-59; a first dynamic sealing device 5-513 and a second dynamic sealing device 5-516 are arranged between contact end faces of the outer ring flange 5-518 and the inner ring 5-58; the first dynamic sealing device 5-513 is embedded into an end face of the inner ring 5-58, and the second dynamic sealing device 5-516 is embedded into the outer ring flange 5-518; the first medium flow-blocking ring 5-54 and the second medium flow-blocking ring 5-517 are respectively in tight fit with the inner walls of the inner ring flange 5-51 and the outer ring flange 5-518, the first medium flow-blocking ring 5-54 is configured for blocking a mounting groove of the first static sealing device 5-55 so as to avoid impact damage to the first static sealing device 5-55 by a fluid medium and prolong the service life of the first static sealing device 5-55; the second medium flow-blocking ring 5-517 is configured for blocking a mounting groove of the second dynamic sealing device 5-516 so as to avoid impact damage to the second dynamic sealing device 5-516 by a fluid medium and prolong the service life of the second dynamic sealing device 5-516; the inner ring flange 5-51 is provided with a first gas port 5-520, and the outer ring 9 is provided with a second gas port 5-519; an annular cavity 5-580 is formed in the inner ring 5-58; a first gas passage 5-581and a second gas passage 5-582 are formed in the inner ring 5-58, and are respectively configured for communicating the first gas port 5-520 with the annular cavity 5-580, and the gap between the outer ring 5-59 and the inner ring 5-58 with the annular cavity 5-580; a third gas passage 5-583 is formed in the outer ring 5-59 and configured for communicating the gap between the outer ring 5-59 and the inner ring 5-58 with the second gas port 5-519; and the first gas port 5-520, the annular cavity 5-580, the gap between the outer ring 5-59 and the inner ring 5-58 and the second gas port 5-519 form a gas purging loop, so as to achieve moisture replacement in the slideways 5-510 and gas lubrication of the balls.

In use, pipelines are connected by the inner ring flange 5-51 and the outer ring flange 5-518 to achieve 360° rotation of the low-temperature rotating connector. A nitrogen purging loop of the whole rotating sealing connector is formed by sealing devices such as a sealing ring for sealing. In working, a nitrogen supply device inputs nitrogen into the gas purging loop through the first gas port 5-520, so as to ensure that nitrogen is filled in the nitrogen purging loop and is discharged through the second gas port 5-519 to take away moisture in the gas purging loop.

According to the solution of this embodiment, the flow-blocking rings are mounted on the inner ring flange and the outer ring flange of the low-temperature rotating connector, thereby reducing impact of the fluid medium on the sealing device, improving the sealing property and the service life of the sealing device; a spacer block ring is arranged between the balls, thereby avoiding collision and friction between the adjacent balls, ensuring the effectiveness and flexibility of the rotating action of the rotating connector and prolonging the service life of the rotating connector; and the rotating connector is provided with the replaceable slideways, so that the structural property of the slideways is ensured, and the replaceability can reduce the maintenance cost and the maintenance time of the rotating connector.

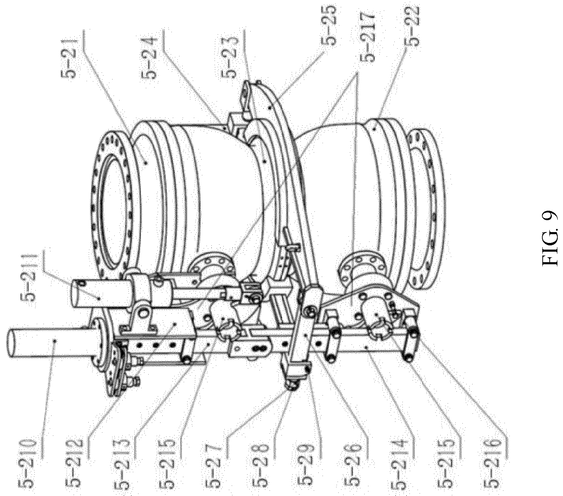

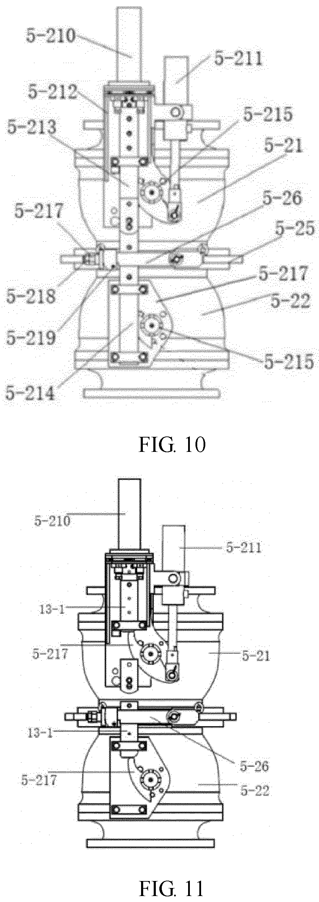

Further, in one embodiment, referring to FIG 9 to FIG 12, the emergency disengagement device 5-2 includes a low-temperature upper ball valve 5-21, a low-temperature lower ball valve 5-22, valve hoops 5-25, a first hydraulic cylinder 5-210, a second hydraulic cylinder 5-211, and a hydraulic system for driving the first hydraulic cylinder 5-210 and the second hydraulic cylinder 5-211, where
a break flange sealing ring 5-23 is arranged between the low-temperature upper ball valve 5-21 and the low-temperature lower ball valve 5-22, and the low-temperature upper ball valve 5-21 and the low-temperature lower ball valve 5-22 are respectively connected to upper and lower connecting pipelines; a hoop bracket 5-24 is fixed on the low-temperature upper ball valve 5-21, one end of each of the two valve hoops 5-25 is connected to the hoop bracket 5-24 through a rotating shaft, the two valve hoops 5-25 clamp the break flange sealing ring 5-23 between the two ball valves, and the other ends of the two valve hoops 5-25 are connected through a clamping rod 5-26; one end of the clamping rod 5-26 is connected to one of the valve hoops 5-25 through a rotating shaft, and the other end of the clamping rod is inserted from a bottom slot of the other one of the valve hoops 5-25, is fixed by a clamping nut 5-27 and is further fastened through a locking nut 5-28; a driving fixed frame 5-212 is fixed on the low-temperature upper ball valve 1, and the first hydraulic cylinder 5-210 and the second hydraulic cylinder 5-211 are fixed on the driving fixed frame 5-212; an upper push rod 5-213 is arranged on the first hydraulic cylinder 5-210, and a lower push rod 5-214 is arranged below the upper push rod 5-213; a push rod 13-1 is fixedly connected to each of the upper push rod 5-213 and the lower push rod 5-214 at the back; each of the low-temperature ball valve 5-21 and the low-temperature lower ball valve 5-22 is provided with a rotating rocker 5-217; the two rotating rockers 5-217 are respectively connected to valve core rotating shafts 5-215 of the low-temperature upper ball valve 5-21 and the low-temperature lower ball valve 5-22; the second hydraulic cylinder 5-211 is connected to one end of the upper-end rotating rocker 5-217 through a rotating shaft; the other end of the upper-end rotating rocker 5-217 is in contact with a lower end of the upper-end push rod 13-1; the lower-end rotating rocker 5-217 is in contact with a lower end of the lower-end push rod 13-1; a push block 5-218 is arranged between the upper push rod 5-213 and the lower push rod 5-214, and the push block 5-218 is configured for pushing the clamping rod 5-26 when the second hydraulic cylinder 5-211 moves downwards. The upper-end push rod 5-213-1 is in contact connection with the upper-end rotating rocker 5-217 to form an avoidance space. When the second hydraulic cylinder 5-211 drives the upper-end rotating rocker 5-217 to rotate, the other end of the upper-end rotating rocker 5-217 can rotate freely downwards at the lower end of the upper-end push rod 13-1 without interfering with the upper push rod 5-213. When the first hydraulic cylinder 5-210 moves downwards, the upper push rod 5-213 can push the upper-end rotating rocker 5-217 to rotate by the upper-end push rod 13-1.

The push block 5-218 may be fixedly connected to the upper push rod 5-213 and may also be fixedly connected to the lower push rod 5-214; when the push block is fixedly connected to the upper push rod 5-213, the lower end of the push block 5-218 is in contact connection with the upper end of the lower push rod 5-214, and when the push block is fixedly connected to the lower push rod 5-214, the upper end of the push block 5-218 is in contact connection with the upper push rod 5-213.

Further, in one embodiment, the emergency disengagement device 5-2 further includes an upper valve valve-position sensor, a lower valve valve-position sensor and a disengagement signal sensor. The upper valve valve-position sensor is mounted on the upper-end rotating rocker 5-217 and configured for separately detecting the on-off state of the low-temperature upper ball valve 5-21 through arrangement of an induction solenoid valve at both rotating limit positions. The lower valve valve-position sensor is mounted on the driving fixed frame 5-212 to detect the on-off state of the lower-temperature ball valve 5-22 by detecting the position of the push rod through arrangement of an induction solenoid valve at a limit position of the push rod. The disengagement signal sensor is arranged on an inner side of the other end of the valve hoop 5-25 and is configured for detecting the opening/closing state of the two hoop valves 5-25 to realize the feedback of a disengagement signal.

Further, in one embodiment, a shear pin 5-29 is arranged on the clamping rod 5-26. The shear pin 5-29 is inserted into the clamping rod 5-26 and the other valve hoop 5-25. The shear pin 5-29 serves as an anti-falling component of the clamping rod 5-26 to prevent the clamping rod 5-26 from falling in the normal operation state. During separation operation, the clamping rod 5-26 is pushed by the push block 5-218 to shear off the shear pin 5-29.

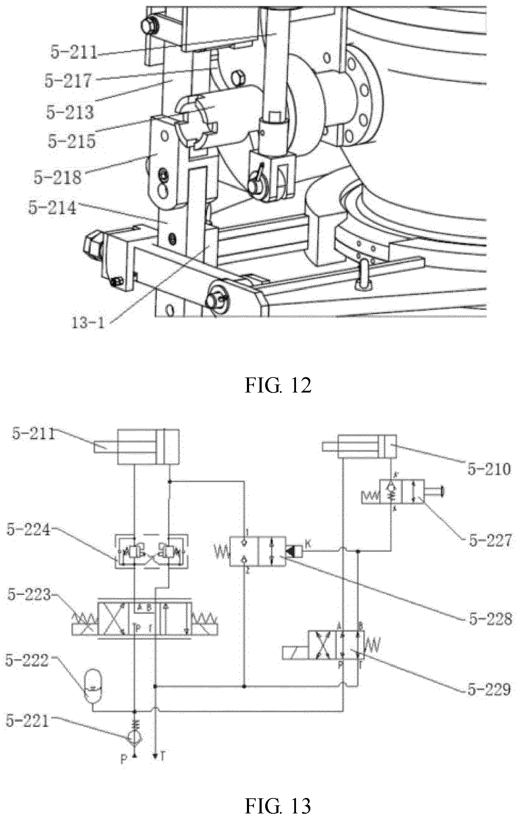

Further, in one embodiment, referring to FIG 13, the hydraulic system of the emergency disengagement device 5-2 includes a one-way valve 5-221, an energy accumulator 5-222, a three-position four-way electro-proportional directional valve 5-223, a two-way balance valve 5-224, a directional valve 5-227, a hydraulic control directional valve 5-228 and a two-position four-way solenoid directional valve 5-229.

One-way valve 5-221: the one-way valve 5-221 is mounted at an inlet of a hydraulic oil source of the hydraulic control system and has a one-way cut-off function; and an external hydraulic oil P supplies oil to the hydraulic control system of the emergency disengagement device through the one-way valve 5-221, and will be cut off in a reversing direction. One part of the external hydraulic oil P acts on a port P of the solenoid directional valve for standby, and one part thereof supplies oil to the energy accumulator 5-222. When the external hydraulic oil P does not supply, due to the one-way cut-off function of the one-way valve, it is ensured that the pressure oil of the energy accumulator 5-222 will not leak out, and the port P of the solenoid directional valve always holds the pressure oil.

Energy accumulator 5-222: the energy accumulator 5-222 serves as an emergency power source and has a function of storing hydraulic pressure oil. When the loading and unloading arm works normally, one part of the pressure oil P in the hydraulic system is supplied to the energy accumulator 5-222 as the emergency power source to ensure that when the hydraulic oil source P is missing, the hydraulic control system still has the emergency power source to guarantee reliable working of emergency disengagement.

Three-position four-way electro-proportional directional valve 5-223: the three-position four-way electro-proportional directional valve 5-223 is a hydraulic control element of the second hydraulic cylinder 5-211 in the emergency disengagement device. According to the position shown in FIG 13, the hydraulic pressure oil source acts on the port P of the three-position four-way electro-proportional directional valve 5-223, and the valve core of the three-position four-way electro-proportional directional valve is located at a middle position, and at this time, ports A and B of the solenoid valve are unloaded, and the second hydraulic cylinder 5-211 keeps in the original position without action. When an electromagnet on the left side of the three-position four-way electro-proportional directional valve 5-223 is energized and the valve core is at the left position, the hydraulic oil P acts on a large cavity of the second hydraulic cylinder 5-211, and a cylinder rod of the second hydraulic cylinder 5-211 extends to drive the upper ball valve of the emergency disengagement device to be opened. When an electromagnet on the right side of the three-position four-way electro-proportional directional valve 5-223 is energized and the valve core is at the right position, the hydraulic oil P acts on a small cavity of the second hydraulic cylinder 5-211, and the cylinder rod of the second hydraulic cylinder 5-211 retracts to drive the upper ball valve of the emergency disengagement device to be closed.

Two-way balance valve 5-224: the two-way balance valve 5-224 is mounted between the three-position four-way electro-proportional directional valve 5-223 and large and small cavity hydraulic loops of the second hydraulic cylinder 5-211. When the three-position four-way electro-proportional directional valve 5-223 does not act, that is, the valve core is in a middle-position unloaded state, the two-way balance valve 5-224 can drive the large and small cavity hydraulic loops of the hydraulic cylinder to be locked, so as to ensure that the upper ball valve of the emergency disengagement device can be kept in the original working state reliably. When the three-position four-way electro-proportional directional valve 5-223 is in a working position, the two-way balance valve 5-224 can automatically adjust the opening degree of the valve core to maintain the movement process of the second hydraulic cylinder 5-211 stable without impact, and effectively relieve the damage to a structural member by liquid impact due to sudden closing or opening of the ball valve when the pipeline of the loading and unloading arm conveys liquid.

Second hydraulic cylinder 5-211: the second hydraulic cylinder 5-211 is a hydraulic power actuating mechanism. When the hydraulic control system sends out a control signal, the opening or closing of the upper ball valve of the emergency disengagement device is realized through the telescopic movement of the cylinder rod of the second hydraulic cylinder 5-211.

First hydraulic cylinder 5-210: the first hydraulic cylinder 5-210 is a hydraulic power actuating mechanism, and is mainly configured for closing of the ball valves of the emergency disengagement device and disengagement of the upper and lower ball valves. When the loading and unloading arm works normally, according to the state shown in FIG 13, the small cavity of the first hydraulic cylinder 5-210 communicates with the hydraulic oil source P, the large cavity communicates with return oil T, and the cylinder rod of the first hydraulic cylinder 5-210 is in a retracted state. Only when there is hydraulic pressure oil in the large cavity of the first hydraulic cylinder 5-210, the emergency disengagement device will start the disengagement action.

Directional valve 5-227: preferably, the directional valve 5-227 is a manual directional valve, which can reduce the false alarm rate and further improve the security and reliability; and the disengagement operation of the emergency disengagement device needs to be manually started after manual confirmation, which can avoid the fully-automatic system automatically triggering the disengagement operation of the emergency disengagement device when a false alarm occurs, causing unnecessary loss, and also can avoid the disengagement accident caused by misoperation. The directional valve 5-27 may also be a solenoid directional valve, but the false rate is relatively high.

The manual directional valve 5-227 is a two-position two-way manual directional valve with a friction positioning function. According to the position shown in FIG 13, the valve core of the manual directional valve 5-227 is located at the left position, and the valve core at the left position has a one-way conducting function, so at this time, the hydraulic pressure oil only can flow from a port A' of the manual directional valve 5-227 to the port A, and will be cut off in a reversing direction. This ensures that the disengagement accident of the emergency disengagement device caused by misoperation can be avoided in normal operation of the loading and unloading arm. After the shore-based loading and unloading arm is engaged with the ship, in case of emergency, a handle of the manual directional valve 5-227 is pushed, the valve core of the manual directional valve 5-227 is switched to the right position to work, and at this time, free conduction between the port A' and the port A of the manual directional valve 5-227 is achieved, and the function of the first hydraulic cylinder 5-210 in the emergency disengagement device is started, which can realize the disengagement operation of the emergency disengagement device.

Hydraulic control directional valve 5-228: the hydraulic control directional valve 5-228 is arranged between the large cavity of the second hydraulic cylinder 5-211 and the return oil T of the system, and controls an oil port K to connect to the large-cavity loop of the first hydraulic cylinder 5-210. According to the state shown in FIG 13, the valve core of the hydraulic control directional valve 5-228 is in a left-position state, oil ports 1 and 2 are cut off, a large-cavity oil path of the second hydraulic cylinder 5-211 is in a cut-off state, and at this time, the second hydraulic cylinder 5-211 can keep the working position unchanged. When the emergency disengagement action needs to be implemented, the pressure oil acts on the large cavity of the first hydraulic cylinder 5-210, and the pressure oil acts on a hydraulic control port K of the hydraulic control directional valve 5-28 at the same time. The valve core of the hydraulic control directional valve 5-228 is pushed to shift to the right position, and at this time, the large-cavity oil path of the second hydraulic cylinder 5-211 communicates with a return oil loop T through the ports 1 and 2 of the hydraulic control directional valve. The cylinder rod of the first hydraulic cylinder 5-210 extends out, the cylinder rod of the second hydraulic cylinder 5-211 retracts back, and the upper and lower ball valves are closed. The upper and lower ball valves in the emergency disengagement device are disengaged from each other by driving the upper and lower ball valves to be closed and the upper and lower ball valve hoops to be opened, thereby separating the loading and unloading arm from the ship.

Two-position four-way solenoid directional valve 5-229: the two-position four-way solenoid directional valve 5-229 mainly controls the movement of the first hydraulic cylinder 5-210 in the hydraulic control system. In normal operation of the loading and unloading arm, when the two-position four-way solenoid directional valve 5-229 is de-energized and in a working state (the right position of the valve core) shown in FIG 13, the pressure oil source P acts on the small cavity of the first hydraulic cylinder 5-210 through the two-position four-way solenoid directional valve 5-229, and the cylinder rod of the first hydraulic cylinder 5-210 is in a retracted state. When emergency disengagement of the loading and unloading arm is needed, the two-position four-way solenoid directional valve 5-229 is energized, and the valve core is at the left position. At this time, the pressure oil source P acts on the large cavity of the first hydraulic cylinder 5-210 through the two-position four-way solenoid directional valve 5-229, and the cylinder rod of the first hydraulic cylinder 5-210 extends out, so as to realize the closing and separation of the ball valves of the emergency disengagement device.

The working principle of this embodiment is as follows:
the hydraulic oil source P provides a hydraulic power source for the hydraulic control system of the emergency disengagement device through the one-way valve 5-221. After passing through the one-way valve 5-221, the pressure oil source P respectively acts on the ports P of the energy accumulator 5-222, the three-position four-way electro-proportional directional valve 5-223 and the two-position four-way solenoid directional valve 5-229. Due to the one-way cut-off function of the one-way valve 5-221, the energy accumulator 5-22 is always full of pressure oil, can provide an emergency power source for the emergency disengagement device, and can rapidly drive the hydraulic actuating mechanism in the emergency disengagement device to move in case of emergency disengagement. In normal operation of the shore-based loading and unloading arm, the valve core of the three-position four-way electro-proportional directional valve 5-223 is at the middle position, and the second hydraulic cylinder 5-211 does not act and keeps in the original working state. The hydraulic pressure oil source acts on the small cavity of the first hydraulic cylinder 5-210 through the two-position four-way solenoid directional valve 5-229 at the right position, so that the cylinder rod of the first hydraulic cylinder 5-210 keeps in the retracted state. When the shore-based loading and unloading arm is in a first-level alarm state, the electromagnet on the right side of the three-position four-way electro-proportional directional valve 5-223 is energized, the valve core works at the right position, the pressure oil enters the small cavity of the second hydraulic cylinder 5-211 through P-A of the three-position four-way electro-proportional directional valve 5-223 and a passage on the left side of the two-way balance valve 5-224, and under the action of the hydraulic pressure oil, the cylinder rod of the second hydraulic cylinder 5-211 retracts to drive the upper ball valve of the emergency disengagement device to be closed. If the first-level alarm state of the shore-based loading and unloading arm is released, the electromagnet on the left side of the three-position four-way electro-proportional directional valve 5-223 is energized, the valve core works at the left position, the hydraulic pressure oil enters the large cavity of the second hydraulic cylinder 5-211 through P-B of the three-position four-way electro-proportional directional valve 5-223 and a passage on the right side of the two-way balance valve 5-224, and under the action of the hydraulic pressure oil, the cylinder rod of the second hydraulic cylinder 5-211 extends out and drives the upper ball valve of the emergency disengagement device to be opened, and the shore-based loading and unloading arm restores to the normal working state. If the alarm state of the shore-based loading and unloading arm is not released, a second-level alarm state is entered and when it is necessary to enter the emergency disengagement state, the electromagnet of the two-position four-way solenoid directional valve 5-229 is energized, and the valve core works at the left position. After the hydraulic pressure oil passes through the P-B of the two-position four-way solenoid directional valve 5-229, one part of the hydraulic pressure oil acts on a control port K of the hydraulic control directional valve 5-228, so that the valve core of the hydraulic control directional valve 5-228 shifts to the right position to work, and the large cavity of the second hydraulic cylinder 5-211 communicates with the return oil T of the system; one part of the hydraulic pressure oil passes through A-A' of the manual directional valve 5-227 (at this time, the manual directional valve 5-227 is in the right-position working condition in FIG 13) and acts on the large cavity of the first hydraulic cylinder 5-210; and under the action of the hydraulic pressure oil, the cylinder rod of the first hydraulic cylinder 5-210 extends out and drives the upper and lower ball valves of the emergency disengagement device to be closed, and the valve hoops 5-25 between the upper and lower ball valves are opened, so that the upper and lower ball valves of the emergency disengagement device are separated (the upper ball valve is left on the loading and unloading arm, and the lower ball valve is left on the ship). After emergency disengagement is completed, the electromagnet of the two-position four-way solenoid directional valve 5-229 is de-energized, and the cylinder rod of the first hydraulic cylinder 5-210 is automatically retracted under the action of the pressure oil, thereby avoiding interference during disengagement. Thus, emergency disengagement between the shore-based loading and unloading arm and the ship is realized, and damage to the loading and unloading arm is avoided. When the second-level alarm state is directly entered, the three-position four-way electro-proportional directional valve 5-223 and the two-position four-way solenoid directional valve 5-229 are energized at the same time, the cylinder rod of the second hydraulic cylinder 5-211 retracts back, the cylinder rod of the first hydraulic cylinder 5-210 extends out, the two hydraulic cylinders work at the same time to drive the upper and lower ball valves of the emergency disengagement device to be closed, and the valve hoops 5-25 between the upper and lower ball valves are opened.

Since the six low-temperature rotating connectors are all provided with sensors for detecting the rotating angle of the low-temperature rotating connectors, and the sensors and the hydraulic system are all connected to a PLC processor, a working area of the loading and unloading arm can be monitored in real time, alarming treatment is performed according to whether the working area of the loading and unloading arm exceeds a set working position range, and the working of the hydraulic system is controlled according to the alarm level to realize different interlocking actions of the two oil cylinders.

Fire alarm detection devices such as carbon dioxide and temperature sensors are arranged near the loading and unloading arm, and detection signals are sent to the PLC processor, and thus emergencies such as fire can be detected in real time. External interference, overweight and external impact will cause the change of the working posture of the loading and unloading arm, so that the loading and unloading arm is in an unsafe working area. The working range of the loading and unloading arm is divided into different working areas, such as a safe working area, an acceptable working area beyond the safe working area, and a dangerous working area.

When the loading and unloading arm is in a normal loading and unloading working state, the valves of the upper and lower ball valves are in an open state. When the system control signal feeds back an alarm signal or the loading and unloading arm works beyond the range, the PLC processor recognizes the alarm level through logical judgment. Alarm recognition is divided into a pre-alarm, a first-level alarm and a second-level alarm. Signals are sent to the alarm device according to the alarm level, and different alarm prompts (for example, buzzers with different sounds or warning lights with different colors) are generated.

When the loading and unloading arm reaches the boundary of the safe area, the PLC processor determines it as the pre-alarm, and gives an alarm to remind the staff to pay close attention to the alarm situation, and the PLC processor controls a hydraulic station of the hydraulic system of the emergency disengagement device to be started, and the hydraulic station is in a working state.

When the loading and unloading arm reaches the boundary of the acceptable working area, the PLC processor determines it as the first-level arm and gives a strong alarm to remind the staff, and the PLC processor controls the hydraulic system to drive the second hydraulic cylinder 5-211 to make the upper-end rotating rocker 5-217 to rotate, which drives rotation of the valve core of the low-temperature upper ball valve 5-21 to close the low-temperature upper ball valve 5-21. The upper valve valve-position sensor feeds back an in-place state, the second hydraulic cylinder 5-211 stops, the state can be determined manually, and disengagement is performed. When the loading and unloading arm returns to the safe area or the acceptable working area, the second hydraulic cylinder 5-211 drives the upper-end rotating rocker 5-217 to rotate reversely, which drives reverse rotation of the valve core of the low-temperature upper ball valve 5-21 to open the low-temperature upper ball valve 5-21. The upper valve valve-position sensor feeds back an in-place state, the second hydraulic cylinder 5-211 stops, and the normal working state is restored. When it enters the second-level alarm from the first-level alarm, the PLC processor controls the hydraulic system to drive the first hydraulic cylinder 5-210 to work, so that the lower-end rotating rocker 5-217 rotates to close the low-temperature lower ball valve 5-22, and the clamping rod 5-26 is pushed to separate the two valve hoops 5-25, so as to realize the separation of the low-temperature upper ball valve 5-21 and the low-temperature lower ball valve 5-22. When the loading and unloading arm exceeds the boundary of the acceptable working area to enter the dangerous working area or in case of emergency, the PLC processor directly determines it as the second-level alarm, gives a stronger alarm and starts automatic disengagement control, and the PLC processor controls the hydraulic system to drive the first hydraulic cylinder 5-210 and the second hydraulic cylinder 5-211 to work at the same time, so that the upper and lower rotating rockers 5-217 rotate at the same time, the low-temperature upper ball valve 5-21 and the low-temperature lower ball valve 5-22 are closed at the same time, and the clamping rod 5-26 is pushed to separate the two valve hoops 5-25, so as to realize the separation of the low-temperature upper ball valve 5-21 and the low-temperature lower ball valve 5-22.

According to the solution of the abovementioned emergency disengagement device embodiment, different response working conditions can be realized through different alarm states, the control system can be returned to the working state according to the state improvement and change, and the reversible operation property of the control system can be improved. For the second-level alarm, closing the upper and lower ball valves and opening the valve hoops realize the separation operation of the emergency disengagement device, thereby facilitating step-by-step control of the system, avoiding unnecessary economic loss and improving the security and working efficiency of the loading and unloading arm.

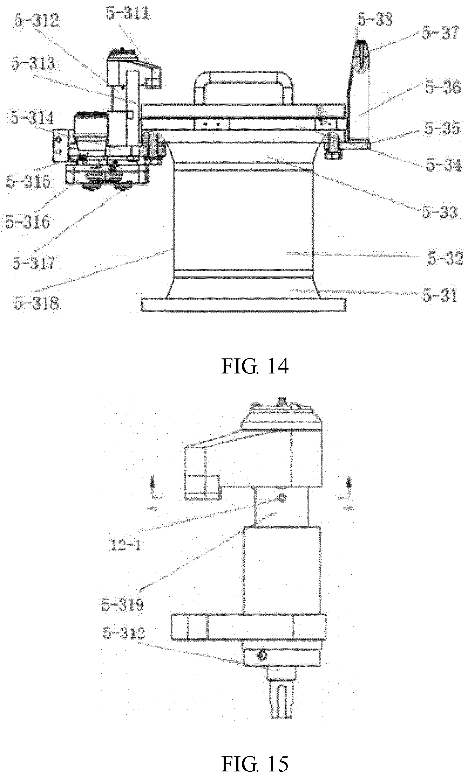

Further, in one embodiment, referring to FIG 14, the rapid connection device 5-3 includes a connecting pipeline 5-32, a plurality of guide mechanisms 5-38 for engagement of a transport ship flange, and a plurality of pressing mechanisms 5-317. A connecting flange capable of being connected to a pipeline is arranged at one end of the connecting pipeline 5-32, an engagement flange 5-33 connected to a sealing flange plate 5-324 is arranged at the other end of the connecting pipeline 5-322. The sealing flange plate 5-34 is configured for connecting to the transport ship flange (not shown in the figure), and the plurality of guide mechanisms 5-38 and the plurality of pressing mechanisms 5-317 are uniformly arranged around the engagement flange 5-33. The plurality of guide mechanisms 5-38 form an expanding mouth shape from the engagement flange 5-33 to the outside for guiding engagement of the transport ship flange; the plurality of guide mechanisms 5-38 are in the expanding-outward mouth shape, which enlarges a compatible radius of automatic engagement between the engagement flange 5-33 and the transport ship flange and is compatible with a certain range of automatic engagement error; and the plurality of guide mechanisms gradually converge inwards, thereby ensuring the centering degree between the engagement flange 5-33 and the transport ship flange.

Further, in one embodiment, referring to FIG 14, the pressing mechanism 5-317 includes a pressing block 5-311, a screw rod 5-312, a limiting column 5-313, a mounting base 5-314, a driving device 5-315 and a transmission mechanism 5-316. The mounting bases 5-314 are uniformly fixed on the engagement flange 5-33 along a circumferential direction of the engagement flange 5-33; the driving device 5-315 and the transmission mechanism 5-316 are connected to the mounting base 5-314; the driving device 5-315 is connected to the screw rod 5-312 through the transmission mechanism 5-316, the screw rod 5-312 is supported on the mounting base 5-314 through a bearing, and the screw rod 5-312 is axially parallel to an axial direction of the connecting pipeline 5-32; and the pressing block 5-311 is arranged on the screw rod 5-312 and the limiting mechanism 5-313 is fixed on the mounting base 5-314, for limiting rotation of the pressing block 5-311 and transforming the threaded rotation movement of the pressing block 5-311 relative to the screw rod 5-312 into linear movement, thereby causing the pressing block 5-311 to press the transport ship flange and the engagement flange 5-33. The pressing block 5-311 can be lifted and self-locked through the threaded rotation between the pressing block 5-311 and the screw rod 5-312. Preferably, the number of the guide mechanisms 5-38 and the number of the pressing mechanisms 5-317 both are greater than or equal to 3, and the guide mechanisms and the pressing mechanisms are arranged sequentially at intervals.

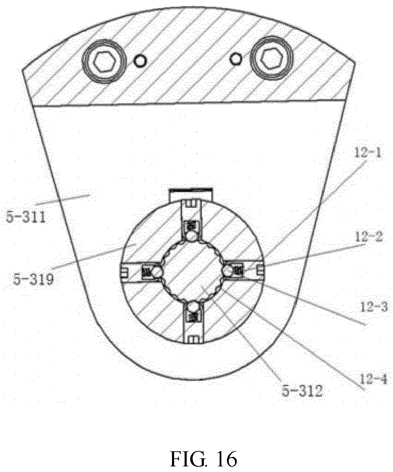

Further, in one embodiment, referring to FIG 15 and FIG 16, an elastic limiting mechanism is arranged between the pressing block 5-311 and the screw rod 5-312. The elastic limiting mechanism is configured for elastic limitation between the pressing block 5-311 and the screw rod 5-312, so that the pressing block 5-311 can rotate together with the screw rod 5-312 (cannot rotate relative to the same). When the pressing block 5-311 is limited, the elastic limitation of the elastic limiting mechanism is released, and the pressing block 5-311 can rotate relative to the screw rod 5-312.

Further, in one embodiment, referring to FIG 15 and FIG 16, the elastic limiting mechanism includes a fixed pin 12-1, a spring 12-2 and a ball 12-3. The pressing block 5-311 is fixedly connected to a threaded sleeve 5-319, and is in threaded connection with the screw rod 5-312 through the threaded sleeve 5-319; a plurality of grooves 12-4 are formed in an outer circle of the screw rod 5-312 at equal intervals; a length direction of the grooves 12-4 is parallel to an axial direction of the screw rod 5-312; a plurality of elastic limiting mechanisms are arranged on the threaded sleeve 5-319 at equal intervals; the fixed pin 12-1 is fixed in the threaded sleeve 5-319, the ball 12-3 is in contact with the groove 12-4, and the spring 12-2 is arranged between the ball 12-3 and the fixed pin 12-1; when the pressing block 5-311 is in a free state (not in contact with the limiting mechanism 5-313), the ball 12-3 is in tight contact with the groove 12-4 under the set action force of the spring 12-2; and when the screw rod 5-312 rotates, the ball 12-3 provides a limitation effect between the threaded sleeve 5-319 and the screw rod 5-312, and the pressing block 5-311 rotates together with the screw rod 5-312 without generating a relative displacement with the screw rod 5-312. When the pressing block 5-311 is limited (in contact with the limiting mechanism 5-313) and the screw rod 5-312 rotates, the ball 12-3 rolls out of the groove 12-4 and compresses the spring12-2, and then rolls into the next groove 12-4. The ball 12-3 continuously compresses the spring 12-2 and falls into one groove 12-4, so that the limitation effect between the threaded sleeve 5-319 and the screw rod 5-312 is released, the pressing block 5-311 can rotate relative to the screw rod 5-312, and the rotating movement is changed into the lifting movement of the pressing block 5-311.

Further, in one embodiment, referring to FIG 14, the guide mechanism 5-38 includes a mounting base 5-35 and a guide rod 5-36. The mounting bases 5-35 are uniformly fixed on the engagement flange 5-33 along the circumferential direction of the engagement flange; and the guide rod 6 is fixed on the mounting base 5-35, and a cut is provided on an inner side of the guide rod 5-36 close to the engagement flange 5-33, so that a circle enclosed by the plurality of guide rods 5-36 has an expanding mouth shape from the inside to the outside. The center offset between the loading and unloading arm connector flange 5-33 and the transport ship header flange is less than 2 cm, centering operation of the two flanges can be implemented through the guidance of the guide mechanism, and good position error compensation ability is achieved.

As a further improvement of the above embodiments, the guide mechanism 5-38 further includes an anti-collision block 5-37. The anti-collision block 5-37 is arranged at the top end of the guide rod 5-36 and configured for preventing damage to the sealing ring on the engagement flange 5-33 caused by accidental impact. The driving device 5-315 is a hydraulic motor, and the transmission mechanism 5-36 includes a driving gear and a driven gear which are meshed with each other; a rotating shaft of the hydraulic motor is connected to the driving gear; and the driven gear is connected to the screw rod 5-312. The driving device 5-315 is the hydraulic motor to output a non-electric driving source as a required rotating torque, and is connected to the screw rod 5-312 through a gear group of the gear transmission mechanism 5-316, so as to realize transmission of the torque and one-button hydraulic rapid engagement of the loading and unloading arm.

In automatic engagement of the loading and unloading system, the ship flange can be gradually attached to the sealing flange plate 5-34 along the guide rod 5-36. After the two flanges are attached, the driving device 5-315 is started, torque transmission is performed through the gear in the transmission mechanism 5-316, the pressing block 5-311 on the screw rod 5-312 is rotated to a limiting column, the limiting column limits the rotation of the pressing block 5-311, a threaded movement assembly 5-312 continues to rotate to change the rotating movement of the pressing block assembly 5-311 into linear movement, and the pressing block 5-311 presses the transport ship flange, so as to realize pressing and self-locking of the two flanges. Conversely, the driving device 5-315 is controlled to reverse, and the pressing block 5-311 rotates reversely and is in contact with the limiting column. At this time, the pressing block 5-311 is located on an outer side of an end face of the engagement flange 5-33, and the pressing block 5-311 is loosened to realize the separation of the two flanges.

According to the solution of the abovementioned rapid connection device embodiment, accidental separation between the loading and unloading arm connector flange and the header flange can be effectively avoided, the elastic limiting mechanism is arranged between the pressing block and the screw rod, and the elastic limiting mechanism is configured for elastic limitation between the pressing block and the screw rod, so that the pressing block can rotate together with the screw rod. When the pressing block is limited, the elastic limitation of the elastic limiting mechanism is released, and the pressing block can rotate relative to the screw rod to transform the rotating movement into linear movement. The guide mechanism is provided. During automatic engagement, the center offset between the loading and unloading arm connector flange and the header flange is small, the centering operation of the two flanges can be implemented through guidance of the guide mechanism, and good position error compensation ability is achieved.

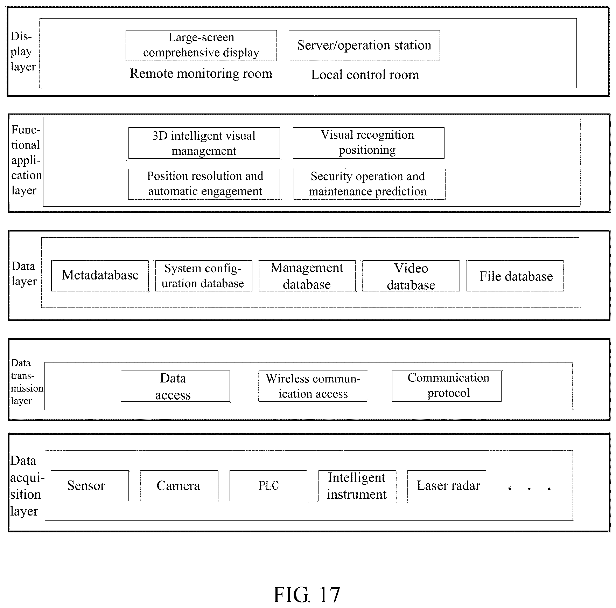

As shown in FIG 17, the architecture development of the 3D intelligent management and control platform of the present invention may be divided into five layers from bottom to top: a data acquisition layer, a data transmission layer, a data layer, a functional application layer and a display layer. The data acquisition layer acquires related data mainly by means of a pressure sensor, a temperature sensor, a rotary encoder, a photoelectric sensor, a limiting switch, an angle encoder, an intelligent instrument, a camera and other devices. The data transmission layer transmits the acquired data to the data layer to complete data storage. The functional application layer achieves functions of three-dimensional visual management, visual recognition positioning, position resolution and automatic engagement, and security operation and maintenance prediction according to data of the corresponding database. The display layer is mainly responsible for the publication and display of visual information, dynamic visual display of the model.

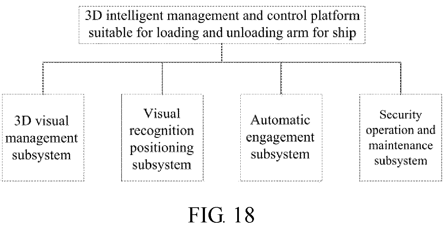

Further, in one embodiment, referring to FIG 18, the 3D intelligent management and control platform further includes a three-dimensional visual management subsystem, a visual recognition positioning subsystem and an automatic engagement subsystem.

The three-dimensional visual management subsystem is configured for displaying an image and data information of a loading and unloading arm operation environment in real time, and is further configured for displaying a three-dimensional model of the loading and unloading arm operation environment and implementing linkage between the three-dimensional model and an actual loading and unloading arm operation environment.

Here, the linkage includes action linkage and data linkage of movement components such as the loading and unloading arm.

The visual recognition positioning subsystem is configured for positioning position and posture information of a target flange on a ship, and is further configured for detecting an obstacle in the moving process of the loading and unloading arm and transferring the position and posture information and obstacle information to the automatic engagement subsystem.

The automatic engagement subsystem is configured for resolving the position and posture information and obstacle information of the target flange on the ship, acquiring a motion trajectory and a required motion angle value of each joint of the marine loading and unloading arm for implementing engagement between the engagement flange of the loading and unloading arm and the target flange on the ship, and transferring the motion trajectory and angle value information to a motion control mechanism of the loading and unloading arm.

According to the solution of this embodiment, the model-based digital management, three-dimensional dynamic linkage display and integrated video monitoring functions are achieved through the three-dimensional visual management subsystem so as to achieve omni-directional visual management; through the visual recognition positioning subsystem and the automatic engagement subsystem, automatic engagement control of the loading and unloading arm and the target ship is realized, the production operation efficiency and accuracy are improved, and the management cost is reduced; and through the security operation and maintenance prediction, the security alarm, early-warning and component life prediction are unified, personnel patrol inspection and record flow are simplified, and the digitization and intelligence levels are improved. By use of the solution of this embodiment, the problems that a loading and unloading arm management and control platform for a ship at a wharf is weak in function, single in system, dispersed in management, scattered in data management, poor in visual display capability, lack of 3D vision-based accurate imaging and intelligent automatic engagement, low in loading and unloading operation efficiency, etc. are solved.

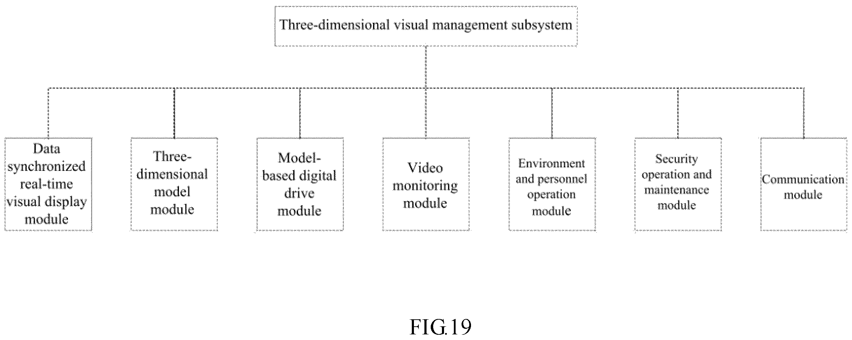

Further, in one embodiment, referring to FIG 19, the three-dimensional visual management subsystem includes:
a data synchronized real-time visual display module is configured to display real-time data of the loading and unloading arm operation environment, where the loading and unloading arm operation environment includes the loading and unloading arm itself.

Here, the real-time data includes: the environment status (such as temperature, relative humidity, wind direction, wind speed, wave height, recent temperature and wave height change trend) of the operation environment, ship-shore information (relative angle of the ship to the wharf, ship-shore distance, ship name and nationality) and operation personnel information, movement data of the loading and unloading arm, operation links (the operation links depend on the actual operation environment, for example, the loading and unloading arm is in a floating state, in an automatic engagement/manual engagement state and in an engagement confirmed state) where the loading and unloading arm is located, parameter information of each device for driving the loading and unloading arm to work, etc.

A three-dimensional model module is configured to build and display a three-dimensional model of the loading and unloading arm operation environment in proportion.

Here, the three-dimensional model module supports direct import of a three-dimensional model from a model base, thereby improving the compatibility of the system, reducing the building difficulty of the model and improving the building efficiency of the model.

Here, the import of a three-dimensional model in various types (for example, 3ds, .lwo, .obj, .objx, .stl, .off and the like) of files is supported.

A model-based digital drive module is configured to drive linkage between the three-dimensional model of the loading and unloading arm operation environment and the actual loading and unloading arm operation environment.

Here, through linkage, three-dimensional real-time display of the movement state of each component in the operation environment of the loading and unloading arm can be realized, visual monitoring of the whole process of LNG ship-shore loading and unloading operation is realized, and LNG loading and unloading operation process information can be understood intuitively, conveniently and efficiently.

A video monitoring module is configured to display a real-time image of the loading and unloading arm operation environment.

An environment and personnel operation module is configured to detect whether a current loading and unloading operation environment meets an operation condition, and allocate and record operation personnel and operation situations when the operation condition is met.

Here, it is determined whether the operation condition is met by comparing the actually acquired wharf hydro meteorology environment information such as wind and surge with the self-defined operation standard.

Here, the centralized management of the environment and personnel can be realized.

A communication module is configured to realize data communication between the modules in the three-dimensional visual management subsystem, and between the three-dimensional visual management subsystem and other systems.

Further, in one embodiment, the three-dimensional visual management subsystem further includes an early warning module for acquiring and recording real-time alarm information of each alarm device in the operation environment of the loading and unloading arm and performing audible and visual alarm prompt at the same time.

Further, in one embodiment, the three-dimensional model module includes:
a first window control unit, configured to self-define the number of windows for displaying the three-dimensional models of the operation environment of the loading and unloading arm, and respectively display a plurality of three-dimensional models of the operation environment of the loading and unloading arm in different orientations and different fields of view through a plurality of windows; and/or
a first switching unit, configured to switch in the same window to display the three-dimensional models of the operation environment of the loading and unloading arm in different orientations and different fields of view.

By use of the solution of this embodiment, omni-directional observation of the model can be realized.

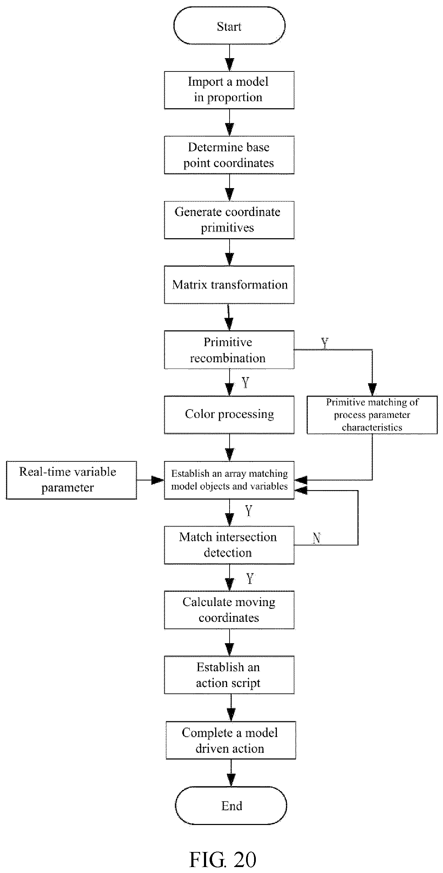

Further, in one embodiment, referring to FIG 20, the model-based digital drive module drives linkage between the model of the operation environment of the loading and unloading arm and the actual operation environment of the loading and unloading arm by the following specific processes:
(1) the digital three-dimensional model, including:
   resolving each three-dimensional model capable of implementing movement in the three-dimensional models of the operation environment of the loading and unloading arm into several corresponding movement data objects;
   determining the own base point coordinates of each movement model;
   generating a coordinate primitive corresponding to each movement data object based on the base point coordinates; and
   performing matrix transformation on the coordinate primitives to recombine the coordinate primitives, and adding actual process parameters for the coordinate primitives;
(2) performing linkage, including:
   matching a movement data object of each movement model with an actual movement data object in a one-to-one correspondence manner;
   calculating the coordinates of the movement required by the current movement data object state of the movement model to reach the actual movement data object state; and
   establishing an action script of the movement model according to the moving coordinates to realize linkage between the three-dimensional model of the loading and unloading arm operation environment and the actual the loading and unloading arm operation environment.

Further, in one embodiment, the video monitoring module includes:
a second window control unit, configured to self-define the number of video monitoring windows and respectively display a plurality of operation environments of the loading and unloading arm in different orientations and different fields of view through a plurality of windows; and/or
a second switching unit, configured to switch in the same window to display the operation environment of the loading and unloading arm in different orientations and different fields of view.

Here, the video monitoring module may further include all functions of existing video monitoring, for example, maximization, minimization, full screen, video playback, fast-forward and rewind of video recording, screenshot, focusing and zoom.

Further, in one embodiment, the communication module includes a firewall, an Ethernet bus, a redundant server, a PLC controller, a redundant control ring network and a communication monitoring unit, where the firewall is configured to connect an external third-party network; the Ethernet bus is connected to the redundant control ring network through the redundant server; the Ethernet bus is connected to each submodule of the three-dimensional visual management system; the redundant control ring network is connected to the PLC controller and other external systems; and the communication monitoring unit is configured to monitor in real time whether communication between each subsystem and module fails and perform alarm prompt in case of failure.

Further, in one embodiment, the visual recognition positioning subsystem includes:
a rough positioning unit, configured to preliminarily perform rough positioning on the position and posture information of the target flange on the ship; and
a fine positioning unit, configured to further perform fine positioning on the position and posture information of the target flange on the ship in real time based on the positioning of the rough positioning unit, and further configured to detect an obstacle in the moving process of the loading and unloading arm and transfer the position and posture information and obstacle information to the automatic engagement subsystem.

Here, the rough positioning unit and the fine positioning unit may be visual cameras.

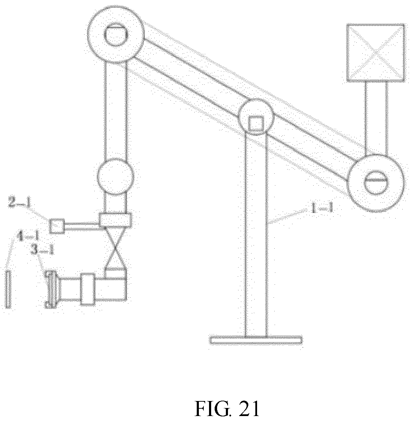

As a specific example, referring to FIG 21, the rough positioning visual camera may be arranged on an upright column 1-1 of a loading and unloading arm body, and the fine positioning visual camera may be arranged on a three-dimensional rotating connector 2-1 that is mounted at the tail end of the loading and unloading arm to drive an engagement flange 3-1 of the loading and unloading arm to move.

Further, in one embodiment, the fine positioning unit is further configured to trigger an alarm signal when detecting a sudden invasion of a moving obstacle in the moving process of the loading and unloading arm.

Further, in one embodiment, the rough positioning unit realizes the rough positioning of the position and posture information of the target flange on the ship through an infrared laser light source and by the following specific processes:
emitting, by the infrared laser light source, laser light to a target area where the target flange on the ship is located;
performing ranging by measuring transmission time between the light source and the target area, and determining a distance of each object in the target area, and drawing a three-dimensional depth image of the target area; and
extracting the target flange on the ship from the three-dimensional depth image according to the known shape and structure characteristics of the target flange on the ship, and determining position and posture information of the target flange on the ship.

According to the solution of this embodiment, the error precision may be controlled within ±5 cm in position and within ±5° in angle in the position and posture information of rough positioning of the target flange.

Further, in one embodiment, the fine positioning unit acquires an image of the target flange on the ship through a laser 3D visual camera in combination with a triangular ranging principle to realize real-time fine positioning of the position and posture information of the target flange on the ship.

According to the solution of this embodiment, the error precision may be controlled within ±2 cm in position and within ±2° in angle in the position and posture information of rough-positioning of the target flange.

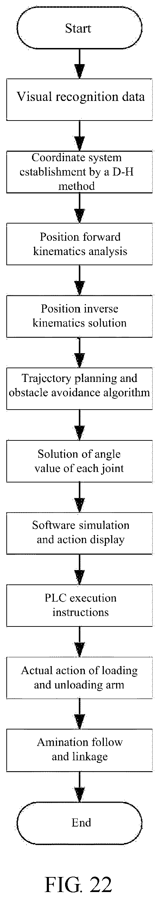

Further, in one embodiment, referring to FIG 22, the automatic engagement subsystem resolves the position and posture information and obstacle information of the target flange on the ship by the following specific processes:
analyzing the configuration of the loading and unloading arm by a D-H representation method, and establishing a position coordinate system of movable joints of the loading and unloading arm;
performing forward kinematics analysis and inverse kinematics solution according to the position and posture information of the target flange on the ship;
planning a motion trajectory of the loading and unloading arm according to the obstacle information acquired by the visual recognition positioning subsystem,
where specifically, trajectory planning and obstacle avoidance for potential dangers such as possible collision, departure from the normal working area and interference of multi-arm actions are performed according to the 3D visual recognized obstacle position information, and the main method is to design an obstacle-avoidance path in a Cartesian space and then intersperse with a given function parameter, the parameter being a coordinate parameter for each point of the path; and
performing inverse solution to obtain a required motion angle value of each joint of the loading and unloading arm according to the motion trajectory of the loading and unloading arm.

The automatic engagement may select an optimal action path in obstacle-free paths and transfer the operation result to the actuating mechanism to realize accurate automatic engagement, and may also perform interference area trajectory planning on the potential dangers such as possible collision, departure from the normal working area and interference of multi-arm actions, and perform pre-determination, alarm and emergency treatment, so as to ensure the security of the movement process.

Further, in one embodiment, the security operation and maintenance prediction subsystem includes:
a fault predicting module, configured to predict future fault information of each component, including the type of a fault and the cycle of the fault, according to historical fault data of the component, and set several fault monitoring periods according to the cycle;
an inferiorization trend predicting module, configured to predict a inferiorization trend of the component according to the cycle of the fault, determine a period where an inferiorization trend value is less than a preset threshold, and record the period as an inferiorization trend monitoring period;
a life predicting module, configured to predict operating life information of the currently used component according to historical operating life information of the used component, and set a life monitoring period according to a life endpoint;
a security monitoring module, configured to automatically trigger working in the fault monitoring period and/or the inferiorization trend monitoring period and/or the life monitoring period for monitoring the operation state of the component all the time, giving an alarm in time when insecurity factors occur and sending an early warning instruction to a security maintenance planning unit, where the insecurity factors include the fault, the inferiorization trend and the life and are derived from a user custom-built insecurity factor base corresponding to each component, each insecurity factor in the base corresponding to multiple insecurity levels, and the early warning instruction includes the insecurity factors and the insecurity levels corresponding thereto;
a security maintenance planning module, configured to formulate a security maintenance planning table according to early warning instruction information, the planning table including own parameters and position information of the component, and insecurity factors, insecurity levels, pre-inspection mode, pre-inspection time and pre-inspection personnel corresponding thereto, the pre-inspection mode including maintaining and repairing the current component, and replacing the same type of components or other types of components, and the pre-inspection mode being self-defined according to the insecurity factors and the insecurity levels corresponding thereto; and
a security maintenance performing and recording module, configured to allocate security maintenance tasks according to the security maintenance planning table and updating the security maintenance planning table after each security maintenance, the recording table including own parameters and position information of the component, and an inspection mode, inspection time, an inspection result and inspection personnel corresponding thereto.

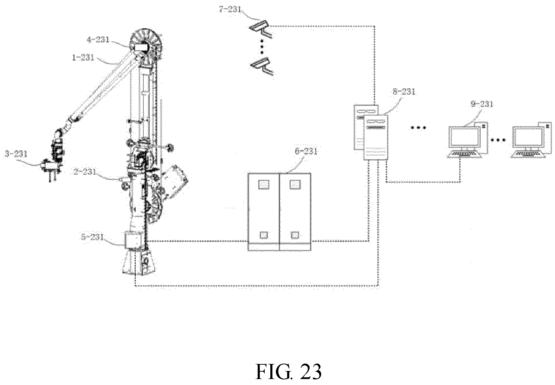

As a specific example, in one embodiment, a 3D intelligent management and control platform suitable for a marine loading and unloading arm is provided. As shown in FIG 23, the platform includes a loading and unloading arm 1-231, a laser camera 2-231, a laser 3D camera 3-231, an explosion-proof rotary encoder 4-231, an explosion-proof junction box 5-231, a PLC control cabinet 6-231, a video monitoring head 7-231, a server 8-231 and a client 9-231. The loading and unloading arm 2-231 is located at a wharf shore, the laser camera 2-231 is mounted on an upright column of the loading and unloading arm, the laser 3D camera 3-231 is mounted at the frontmost end of the loading and unloading arm, the explosion-proof rotary encoder 4-231 is mounted at each joint of the loading and unloading arm, and the explosion-proof junction box 5-231 is mounted at the bottom end of the loading and unloading arm. The explosion-proof junction box is electrically connected to the PLC control cabinet 6-231 after signal access of the explosion-proof rotary encoder 4-231 and is connected to the server 8-231 through a network cable after signal access of the laser camera 2-231 and the laser 3D camera 3-231. The PLC control cabinet 6-231 is connected to the server 8-231 through a network cable to acquire signals and receive instructions. The server 8-231 is installed with software for the 3D intelligent management and control platform, the software including a visual recognition positioning algorithm and an automatic engagement algorithm, and distributes a software interface to each client 9-231 through a server publishing mode familiar to professionals.

Further, elevation-angle floating information of the loading and unloading arm 1-231 is transferred by the explosion-proof rotary encoder 4-231 to the PLC control cabinet 6-231 and is transferred to the 3D intelligent management and control platform software after PLC processing, so that the model in the software can perform action according to the actual action of the loading and unloading arm. The laser camera 2-231 and the laser 3D camera 3-231 are directly connected to the server 8-231 of an upper computer through signals for transferring information of an interface target to the visual recognition positioning algorithm, the solved coordinate information is transmitted to the automatic engagement algorithm, the joint angle of the loading and unloading arm to be by driven by the PLC is checked, a command is sent to the PLC control cabinet 6-231 for control, and the loading and unloading arm is driven to implement automatic engagement with the ship body.

According to the present invention, the automation and intelligence levels of the LNG large-caliber shore-based loading and unloading system are greatly improved through vision-based automatic engagement and real-time intelligent management and control. The loading and unloading arm maintains gravity balance at all rotation positions, thereby greatly reducing an unbalanced inertia force in movement of the system, reducing the load of a driving mechanism, and improving the movement stability of the system. The 3D intelligent management and control platform solves the problems that a loading and unloading arm management and control platform for a ship at a wharf is weak in function, single in system, dispersed in management, scattered in data management, poor in visual display capability, lack of 3D vision-based accurate imaging and intelligent automatic engagement, low in loading and unloading operation efficiency, etc.

The basic principles, main features and advantages of the present invention have been shown and described above. It should be understood by those skilled in the art that, the present invention is not limited by the aforementioned embodiments. The aforementioned embodiments and the description are only used for illustrating the principle of the present invention.

## Claims

1. An LNG large-caliber shore-based intelligent loading and unloading system, comprising a loading and unloading arm and a 3D intelligent management and control platform, wherein
the loading and unloading arm is configured to implement an automatic engagement and an emergency disengagement between an LNG ship and an LNG passage at LNG terminal storage tanks; and
the 3D intelligent management and control platform is configured to implement a real-time online management and control on a loading and unloading process of the loading and unloading arm,
wherein the 3D intelligent management and control platform includes
a data acquisition layer configured to acquire data;
a data transmission layer configured to transmit the acquired data to a data layer;
the data layer configured to store the acquired data;
a function application layer and a display layer configured to achieve functions of a three-dimensional visual management, a visual recognition positioning, a position resolution and automatic engagement and a security operation and maintenance prediction;
the display layer configured to publish and display visual information, and display a dynamic visual of a model, wherein
the function application layer further includes a three-dimensional visual management subsystem, a visual recognition positioning subsystem, an automatic engagement subsystem, and a security operation and maintenance prediction subsystem, wherein
the three-dimensional visual management subsystem is configured to display an image and data information of a loading and unloading arm operation environment in real time, and is further configured to display a three-dimensional model of the loading and unloading arm operation environment and implement a linkage between the three-dimensional model and an actual loading and unloading arm operation environment;
the visual recognition positioning subsystem is configured to position position and posture information of a target flange on a ship, and is further configured to detect an obstacle in a moving process of the loading and unloading arm and transfer the position and posture information and obstacle information to an automatic engagement subsystem;
the automatic engagement subsystem is configured to resolve the position and posture information and obstacle information of the target flange on the ship, acquire a motion trajectory and a required motion angle value of each joint of a marine loading and unloading arm for implementing an engagement between the engagement flange of the loading and unloading arm and the target flange on the ship, and transfer the motion trajectory and angle value information to a motion control mechanism of the loading and unloading arm; and
wherein the security operation and maintenance predicting subsystem is configured to predict future security data of each component according to historical security data of each component in a working environment of the loading and unloading arm, formulate and implement a security operation and maintenance plan according to the predicted security data, and display the predicted security data, the security operation and maintenance plan and the security operation and maintenance result;
wherein the security operation and maintenance predicting subsystem includes:
a fault predicting module, configured to predict future fault information of each component, including the type of a fault and the cycle of the fault, according to historical fault data of the component, and set several fault monitoring periods according to the cycle;
an inferiorization trend predicting module, configured to predict a inferiorization trend of the component according to the cycle of the fault, determine a period where an inferiorization trend value is less than a preset threshold, and record the period as an inferiorization trend monitoring period;
a life predicting module, configured to predict operating life information of the currently used component according to historical operating life information of the used component, and set a life monitoring period according to a life endpoint;
a security monitoring module, configured to automatically trigger working in the fault monitoring periods and/or the inferiorization trend monitoring period and/or the life monitoring period for monitoring the operation state of the component all the time, giving an alarm in time when insecurity factors occur and sending an early warning instruction to a security maintenance planning module, where the insecurity factors include the fault, the inferiorization trend and the operating life and are derived from a user custom-built insecurity factor base corresponding to each component, each insecurity factor in the base corresponding to multiple insecurity levels, and the early warning instruction includes the insecurity factors and the insecurity levels corresponding thereto;
a security maintenance planning module, configured to formulate a security maintenance planning table according to the early warning instruction information, the planning table including own parameters and position information of the component, and insecurity factors, insecurity levels, pre-inspection mode, pre-inspection time and pre-inspection personnel corresponding thereto, the pre-inspection mode including maintaining and repairing the current component, and replacing the same type of components or other types of components, and the pre-inspection mode being self-defined according to the insecurity factors and the insecurity levels corresponding thereto; and
a security maintenance performing and recording module, configured to allocate security maintenance tasks according to the security maintenance planning table and updating the security maintenance planning table after each security maintenance, the table including own parameters and position information of the component, and an inspection mode, inspection time, an inspection result and inspection personnel corresponding thereto.

2. The LNG large-caliber shore-based intelligent loading and unloading system according to claim 1, wherein the loading and unloading arm includes an upright column (1), a trunnion box (2), an inner arm (3), an outer arm (4), a low-temperature pipeline system and a counterweight system, wherein a lower end of the inner arm (3) is connected to the upright column (1) through the trunnion box (2), the trunnion box (2) is connected to the upright column (1) through a first slewing bearing (10), the inner arm (3) is connected to the trunnion box (2) through a second slewing bearing (20), the low-temperature pipeline system includes a plurality of low-temperature rotating connectors capable of 360° rotation, an emergency disengagement device (5-2) capable of active separation, a rapid connection device (5-3) and a connecting pipeline (5-1);
the stainless steel connecting pipeline (5-1) passes through the upright column (1) and is connected to the emergency disengagement device (5-2) and the rapid connection device (5-3) sequentially through the inner arm (3) and the outer arm (4), an elbow (6) is arranged between connecting pipelines of the upright column (1) and the inner arm (3), a lower end of the elbow (6) and a pipeline arranged in the upright column (1) are connected through a first low-temperature rotating connector (5-4), and an upper end of the elbow (6) and the pipeline of the inner arm (3) are connected through a second low-temperature rotating connector (5-5), the first low-temperature rotating connector (5-4) and the first slewing support (10) have a same rotating center, and the second low-temperature rotating connector (5-5) and the second slewing support (20) have a same rotating center; a rotary driving device (7) is arranged between the trunnion box (2) and the upright column (1), and the rotary driving device (7) is configured for driving rotary motion of the trunnion box (2) relative to the upright column (1), an inner arm swinging mechanism (8) is arranged between the inner arm (3) and the trunnion box (2) and configured for driving rotation of the inner arm (3) relative to the trunnion box (2), the outer arm (4) is connected to the inner arm (3) through a third slewing support (30), a third low-temperature rotating connector (5-6) is arranged between connecting pipelines of the outer arm (4) and the inner arm (3), the third low-temperature rotating connector (5-6) and the third slewing support (30) have a same rotating center, a pipeline at a front end of the outer arm is sequentially connected to a fourth low-temperature rotating connector (5-7), a fifth low-temperature rotating connector (5-8), the emergency disengagement device (5-2), a sixth low-temperature rotating connector (5-9) and the rapid connection device (5-3), three low-temperature rotating connectors, the emergency disengagement device (5-2) and the rapid connection device (5-3) form a three-dimensional connector at the front end of the outer arm. and the counterweight system is arranged between the inner arm (3) and the outer arm (4), and the counterweight system makes a plane of symmetry of a counterweight always be parallel to a plane of symmetry of the outer arm (4).

3. The LNG large-caliber shore-based intelligent loading and unloading system according to claim 2, wherein the counterweight system includes a counterweight assembly, a roller (6-3), a counterweight sheave (6-4), an outer arm sheave (6-5), a steel wire rope (6-6) and a counterweight driving wheel (6-7), wherein
the counterweight assembly is fixedly connected to one end of the roller (6-3), another end of the roller (6-3) is connected to a lower end of the inner arm (3) through a fourth slewing support (40), the counterweight sheave (6-4) is sleeved on the roller (6-3), the outer arm sheave (6-5) is connected to an outer ring of the fourth slewing support (40), the steel wire rope (6-6) is connected between the counterweight sheave (6-4) and the outer arm sheave (6-5), the steel wire rope (6-6) is fixed on the counterweight sheave (6-4) and the outer arm sheave (6-5), a plane of symmetry of the counterweight assembly is parallel to the plane of symmetry of the outer arm (4), and an outer arm swinging mechanism (9) is arranged on the inner arm (3) and configured for driving rotation of the counterweight sheave (6-4).

4. The LNG large-caliber shore-based intelligent loading and unloading system according to claim 2 or 3, wherein the rotary driving device (7), the inner arm swinging mechanism (8) and the outer arm swinging mechanism (9) each include a fixed base (21), a driving oil cylinder (22), movable pulleys (23), a driven sheave (24) and a driving steel wire rope (25), wherein the driving oil cylinder (22) is a double-acting hydraulic cylinder, two ends of the driving oil cylinder (22) are connected to the movable pulleys (23), the driving steel wire rope (25) is connected to the fixed base (21) at one end, then goes around the movable pulley (23) at one end by a semicircle, around the driven sheave (24) by one circle and then around the movable pulley (23) at another end by a semicircle, and then is fixed to the fixed base (21) at another end, wherein
for the rotary driving device (7), the driving oil cylinder (22) is fixed on the trunnion box (2) through the fixed base (21), and the driven sheave (24) is connected to an outer ring of the first slewing support (10); for the inner arm swinging mechanism (8), the driving oil cylinder (22) is fixed on the trunnion box (2) through the fixed base (21), and the driven sheave (24) is connected to an outer ring of the second slewing support (20); and for the outer arm swinging mechanism (9), the driving oil cylinder (22) is fixed on the inner arm (3) through the fixed base (21), and the driven sheave (24) is connected to the roller (6-3).

5. The LNG large-caliber shore-based intelligent loading and unloading system according to claim 2, wherein the emergency disengagement device (5-2) includes a low-temperature upper ball valve (5-21), a low-temperature lower ball valve (5-22), valve hoops (5-25), a first hydraulic cylinder (5-210), a second hydraulic cylinder (5-211), and a hydraulic system configured for driving the first hydraulic cylinder (5-210) and the second hydraulic cylinder (5-211), wherein
a driving fixed frame (5-212) is fixed on the low-temperature upper ball valve (5-21), and the first hydraulic cylinder (5-210) and the second hydraulic cylinder (5-211) are fixed on the driving fixed frame (5-212), an upper push rod (5-213) is arranged on the first hydraulic cylinder (5-210), and a lower push rod (5-214) is arranged below the upper push rod (5-213), a break flange sealing ring (5-23) is arranged between the low-temperature upper ball valve (5-21) and the low-temperature lower ball valve (5-22), a hoop bracket (5-24) is fixed on the low-temperature upper ball valve (5-21), and one end of each of the two valve hoops (5-25) is connected to the hoop bracket (5-24) through a rotating shaft and another ends of the two valve hoops are connected through a clamping rod (5-26), each of the low-temperature upper ball valve (5-21) and the low-temperature lower ball valve (5-22) is provided with a rotating rocker (5-217), two rotating rockers (5-217) are respectively connected to valve core rotating shafts (5-215) of the low-temperature upper ball valve (5-21) and the low-temperature lower ball valve (5-22), the second hydraulic cylinder (5-211) is connected to one end of the upper-end rotating rocker (5-217) through a rotating shaft, a push rod (13-1) is fixedly connected to each of the upper push rod (5-213) and the lower push rod (5-214) at the back, the upper and lower rotating rockers (5-217) are respectively in contact with lower ends of upper and lower push rods (13-1), and a push block (5-218) configured for pushing the clamping block (5-26) is arranged between the upper push rod (5-213) and the lower push rod (5-214).

6. The LNG large-caliber shore-based intelligent loading and unloading system according to claim 5, wherein the hydraulic system of the emergency disengagement device (5-2) includes a one-way valve (5-221), a three-position four-way electro-proportional directional valve (5-223), a two-way balance valve (5-224), a directional valve (5-227), a hydraulic control directional valve (5-228) and a two-position four-way solenoid directional valve (5-229), wherein
the one-way valve (5-221) is arranged on an inlet of a hydraulic oil resource of a hydraulic control system, an external hydraulic oil supplies oil to a port P of the three-position four-way electro-proportional directional valve (5-223) through the one-way valve and returns oil to a port T, the two-way balance valve (5-224) is arranged between large-cavity and small-cavity hydraulic loops of the three-position four-way electro-proportional directional valve (5-223) and the second hydraulic cylinder (5-211), a pressure oil source supplies oil through a port P of the two-position four-way solenoid directional valve (5-229) and returns oil through a port T, and the directional valve (5-227) is arranged on the large-cavity hydraulic loop of the first hydraulic cylinder (5-210), the hydraulic control directional valve (5-228) is mounted between a large cavity of the second hydraulic cylinder (5-211) and a return oil of the system, and controls an oil port K to connect to the large-cavity loop of the first hydraulic cylinder (5-210), for a first-level alarm, the second hydraulic cylinder (5-211) works to drive the low-temperature upper ball valve (5-21) to be closed, and drive the low-temperature upper ball valve (5-21) to be opened after the alarm is released, when entering a second-level alarm from the first-level alarm, the first hydraulic cylinder (5-210) further drives the low-temperature lower ball valve (5-22) to be closed and pushes the clamping rod (5-26) to open the valve hoops (5-25), and when directly entering the second-level alarm, the first hydraulic cylinder (5-210) and the second hydraulic cylinder (5-211) work at the same time to drive the low-temperature upper ball valve (5-21) and the low-temperature lower ball valve (5-22) to be closed at the same time, and push the clamping rod (5-26) to open the valve hoops (5-25).

7. The LNG large-caliber shore-based intelligent loading and unloading system according to claim 2, wherein the rapid connection device (5-3) includes a connecting pipeline (5-32), a plurality of guide mechanisms (5-38) and a plurality of pressing mechanisms (5-317), wherein a connecting flange (5-31) configured for connecting to the loading and unloading arm is arranged at one end of the connecting pipeline, and an engagement flange (5-33) connected to a sealing flange plate (5-34) is arranged at another end of the connecting pipeline (5-32), and the plurality of guide mechanisms (5-38) and the plurality of pressing mechanisms (5-317) are all arranged around the engagement flange (5-33).

8. The LNG large-caliber shore-based intelligent loading and unloading system according to claim 2, wherein the low-temperature rotating connector includes an inner-ring flange (5-51), an inner ring (5-58), an outer ring (5-59), an outer-ring flange (5-518) and balls (5-511), wherein the inner-ring flange (5-51) is fixedly connected to an upper end of the inner ring (5-58), and a static sealing device is arranged between contact end faces of the inner-ring flange (5-51) and the inner ring (5-58), the outer ring (5-59) is sleeved outside the inner ring (5-58), an annular slideway fixing groove is formed between the outer ring and the inner ring (5-58), and a plurality of balls (5-511) are arranged in the annular slideway, a dynamic moisture sealing device (5-57) is arranged between contact end faces of the outer ring (5-59) and the inner-ring flange (5-51), the outer-ring flange (5-518) is fixedly connected to a lower end of the outer ring (5-59), a static sealing device is arranged between contact end faces of the outer-ring flange (5-518) and the outer ring (5-59), a dynamic sealing device is arranged between contact end faces of the outer-ring flange (5-518) and the inner ring (5-58), the inner-ring flange (5-51) is provided with a first gas port (5-520), and the outer ring (5-59) is provided with a second gas port (5-519), an annular cavity (5-580) is formed in the inner ring (5-58), and the first gas port (5-520), the annular cavity (5-580), a gap between the outer ring (5-59) and the inner ring (5-58), and the second gas port (5-519) are communicated to form a gas purging loop.

9. The LNG large-caliber shore-based intelligent loading and unloading system according to claim 1, wherein the three-dimensional visual management subsystem includes:
a data synchronized real-time visual display module, configured to display real-time data of the loading and unloading arm operation environment, the loading and unloading arm operation environment including the loading and unloading arm itself;
a three-dimensional model module, configured to build and display a three-dimensional model of the loading and unloading arm operation environment in proportion;
a model-based digital drive module, configured to drive linkage between the three-dimensional model of the loading and unloading arm operation environment and the actual loading and unloading arm operation environment;
a video monitoring module, configured to display a real-time image of the loading and unloading arm operation environment;
an environment and personnel operation module, configured to detect whether a current loading and unloading operation environment meets an operation condition, and allocate and record operation personnel and operation situations when the operation condition is met; and
a communication module, configured to realize data communication between the modules in the three-dimensional visual management subsystem, and between the three-dimensional visual management subsystem and other systems.

10. The LNG large-caliber shore-based intelligent loading and unloading system according to claim 1, wherein the visual recognition positioning subsystem includes:
a rough positioning unit, configured to preliminarily perform rough positioning on the position and posture information of the target flange on the ship; and
a fine positioning unit, configured to further perform fine positioning on the position and posture information of the target flange on the ship in real time based on the positioning of the rough positioning unit, further configured to detect an obstacle in the moving process of the loading and unloading arm and transfer the position and posture information and obstacle information to the automatic engagement subsystem, and further configured to trigger an alarm signal when detecting a sudden invasion of a moving obstacle in the moving process of the loading and unloading arm.

11. The LNG large-caliber shore-based intelligent loading and unloading system according to claim 10, wherein the rough positioning unit realizes the rough positioning of the position and posture information of the target flange on the ship through an infrared laser light source and by the following specific processes:
emitting, by the infrared laser light source, laser light to a target area where the target flange on the ship is located;
performing ranging by measuring transmission time between the light source and the target area, and determining a distance of each object in the target area, and drawing a three-dimensional depth image of the target area;
extracting the target flange on the ship from the three-dimensional depth image according to the known shape and structure characteristics of the target flange on the ship, and determining position and posture information of the target flange on the ship; and
acquiring, by the fine positioning unit, an image of the target flange on the ship through a laser 3D visual camera in combination with a triangular ranging principle to realize real-time fine positioning of the position and posture information of the target flange on the ship.

12. The LNG large-caliber shore-based intelligent loading and unloading system according to claim 1 or 10, wherein the automatic engagement subsystem resolves the position and posture information and obstacle information of the target flange on the ship by the following specific processes:
analyzing the configuration of the loading and unloading arm by a **D-H** representation method, and establishing a position coordinate system of movable joints of the loading and unloading arm;
performing forward kinematics analysis and inverse kinematics solution according to the position and posture information of the target flange on the ship;
planning a motion trajectory of the loading and unloading arm according to the obstacle information acquired by the visual recognition positioning subsystem; and
performing inverse solution to obtain a required motion angle value of each joint of the loading and unloading arm according to the motion trajectory of the loading and unloading arm.

## Patentansprüche

1. Intelligentes LNG-Großkaliber-landbasiertes Be- und Entladesystem, umfassend einen Be- und Entladearm und eine intelligente 3D-Management- und Steuerungsplattform, wobei
der Be- und Entladearm konfiguriert ist, eine automatische Kupplung und eine Notabkupplung zwischen einem LNG-Schiff und einem LNG-Durchgang an LNG-Terminal-Lagertanks zu implementieren; und
die intelligente 3D-Management- und Steuerungsplattform konfiguriert ist, ein Echtzeit-Online-Management und -Steuerung an einem Be- und Entladevorgang des Be- und Entladearms zu implementieren,
wobei die intelligente 3D-Management- und Steuerungsplattform umfasst
eine Datenerfassungsschicht, die konfiguriert ist, Daten zu erfassen;
eine Datenübertragungsschicht, die konfiguriert ist, die erfassten Daten an eine Datenschicht zu übertragen;
die Datenschicht, die konfiguriert ist, die erfassten Daten zu speichern;
eine Funktionsanwendungsschicht und eine Anzeigeschicht, die konfiguriert sind, Funktionen eines dreidimensionalen visuellen Managements, einer visuellen Erkennungspositionierung, einer Positionsauflösung und automatischen Kupplung und einer Sicherheitsbetrieb- und Wartungsvorhersage zu erreichen;
die Anzeigeschicht, die konfiguriert ist, visuelle Informationen zu veröffentlichen und anzuzeigen, und eine dynamische Visualisierung eines Modells anzuzeigen, wobei
die Funktionsanwendungsschicht ferner ein dreidimensionales visuelles Management-Subsystem, ein visuelles Erkennungspositionierungs-Subsystem, ein automatisches Kupplungs-Subsystem und ein Sicherheitsbetrieb- und Wartungsvorhersage-Subsystem umfasst, wobei
das dreidimensionale visuelle Management-Subsystem konfiguriert ist, ein Bild und Dateninformationen einer Be- und Entladearm-Betriebsumgebung in Echtzeit anzuzeigen, und ferner konfiguriert ist, ein dreidimensionales Modell der Be- und Entladearm-Betriebsumgebung anzuzeigen und eine Verknüpfung zwischen dem dreidimensionalen Modell und einer tatsächlichen Be- und Entladearm-Betriebsumgebung zu implementieren;
das visuelle Erkennungspositionierungs-Subsystem konfiguriert ist, Positions- und Lageinformationen eines Zielflansches an einem Schiff zu positionieren, und ferner konfiguriert ist, ein Hindernis in einem Bewegungsvorgang des Be- und Entladearms zu detektieren und die Positions- und Lageinformationen und Hindernisinformationen an ein automatisches Kupplungs-Subsystem zu übertragen;
das automatische Kupplungs-Subsystem konfiguriert ist, die Positions- und Lageinformationen und Hindernisinformationen des Zielflansches an dem Schiff zu lösen, eine Bewegungsbahn und einen erforderlichen Bewegungswinkelwert jedes Gelenks eines Marine-Be- und Entladearms zur Implementierung einer Kupplung zwischen dem Kupplungsflansch des Be- und Entladearms und dem Zielflansch an dem Schiff zu erfassen, und die Bewegungsbahn und Winkelwertinformationen an einen Bewegungssteuerungsmechanismus des Be- und Entladearms zu übertragen; und
wobei das Sicherheitsbetrieb- und Wartungsvorhersage-Subsystem konfiguriert ist, zukünftige Sicherheitsdaten jeder Komponente gemäß historischen Sicherheitsdaten jeder Komponente in einer Arbeitsumgebung des Be- und Entladearms vorherzusagen, einen Sicherheitsbetrieb- und Wartungsplan gemäß den vorhergesagten Sicherheitsdaten zu formulieren und zu implementieren, und die vorhergesagten Sicherheitsdaten, den Sicherheitsbetrieb- und Wartungsplan und das Sicherheitsbetrieb- und Wartungsergebnis anzuzeigen;
wobei das Sicherheitsbetrieb- und Wartungsvorhersage-Subsystem umfasst:
ein Fehlervorhersagemodul, das konfiguriert ist, zukünftige Fehlerinformationen jeder Komponente, einschließlich des Typs eines Fehlers und des Zyklus des Fehlers, gemäß historischen Fehlerdaten der Komponente vorherzusagen, und mehrere Fehlerüberwachungsperioden gemäß dem Zyklus zu setzen;
ein Verschlechterungstrendvorhersagemodul, das konfiguriert ist, einen Verschlechterungstrend der Komponente gemäß dem Zyklus des Fehlers vorherzusagen, eine Periode zu bestimmen, in der ein Verschlechterungstrendwert geringer als ein voreingestellter Schwellenwert ist, und die Periode als eine Verschlechterungstrendüberwachungsperiode zu erfassen;
ein Lebensdauervorhersagemodul, das konfiguriert ist, Betriebslebensdauerinformationen der aktuell verwendeten Komponente gemäß historischen Betriebslebensdauerinformationen der verwendeten Komponente vorherzusagen, und eine Lebensdauerüberwachungsperiode gemäß einem Lebensdauerendpunkt zu setzen;
ein Sicherheitsüberwachungsmodul, das konfiguriert ist, automatisch das Arbeiten in den Fehlerüberwachungsperioden und/oder der Verschlechterungstrendüberwachungsperiode und/oder der Lebensdauerüberwachungsperiode auszulösen, um den Betriebszustand der Komponente die ganze Zeit zu überwachen, rechtzeitig einen Alarm zu geben, wenn Unsicherheitsfaktoren auftreten, und eine Frühwarnungsanweisung an ein Sicherheitswartungsplanungsmodul zu senden, wobei die Unsicherheitsfaktoren den Fehler, den Verschlechterungstrend und die Betriebslebensdauer umfassen und von einer benutzerdefinierten Unsicherheitsfaktorbasis abgeleitet sind, die jeder Komponente entspricht, wobei jeder Unsicherheitsfaktor in der Basis mehreren Unsicherheitsstufen entspricht, und die Frühwarnungsanweisung die Unsicherheitsfaktoren und die entsprechenden Unsicherheitsstufen umfasst;
ein Sicherheitswartungsplanungsmodul, das konfiguriert ist, eine Sicherheitswartungsplanungstabelle gemäß den Frühwarnungsanweisungsinformationen zu formulieren, wobei die Planungstabelle eigene Parameter und Positionsinformationen der Komponente und entsprechende Unsicherheitsfaktoren, Unsicherheitsstufen, Vorinspektionsmodus, Vorinspektionszeit und Vorinspektionspersonal umfasst, wobei der Vorinspektionsmodus das Warten und Reparieren der aktuellen Komponente und das Ersetzen derselben Art von Komponenten oder anderer Arten von Komponenten umfasst, und der Vorinspektionsmodus selbst definiert wird gemäß den Unsicherheitsfaktoren und den entsprechenden Unsicherheitsstufen; und
ein Sicherheitswartungsdurchführungs- und Aufzeichnungsmodul, das konfiguriert ist, Sicherheitswartungsaufgaben gemäß der Sicherheitswartungsplanungstabelle zuzuteilen und die Sicherheitswartungsplanungstabelle nach jeder Sicherheitswartung zu aktualisieren, wobei die Tabelle eigene Parameter und Positionsinformationen der Komponente und einen entsprechenden Inspektionsmodus, Inspektionszeit, ein Inspektionsergebnis und Inspektionspersonal umfasst.

2. Intelligentes LNG-Großkaliber-landbasiertes Be- und Entladesystem nach Anspruch 1, wobei der Be- und Entladearm eine aufrechte Säule (1), einen Zapfenkasten (2), einen Innenarm (3), einen Außenarm (4), ein Niedertemperaturrohrleitungssystem und ein Gegengewichtssystem umfasst, wobei ein unteres Ende des Innenarms (3) mit der aufrechten Säule (1) durch den Zapfenkasten (2) verbunden ist, der Zapfenkasten (2) mit der aufrechten Säule (1) durch eine erste Drehverbindung (10) verbunden ist, der Innenarm (3) mit dem Zapfenkasten (2) durch eine zweite Drehverbindung (20) verbunden ist, das Niedertemperaturrohrleitungssystem eine Vielzahl von Niedertemperaturdrehverbindern, die zu 360°-Drehung fähig sind, eine Notabkupplungsvorrichtung (5-2), die zu aktiver Trennung fähig ist, eine Schnellverbindungsvorrichtung (5-3) und eine Verbindungsrohrleitung (5-1) umfasst;
die Edelstahlverbindungsrohrleitung (5-1) durch die aufrechte Säule (1) verläuft und mit der Notabkupplungsvorrichtung (5-2) und der Schnellverbindungsvorrichtung (5-3) sequenziell durch den Innenarm (3) und den Außenarm (4) verbunden ist, ein Bogen (6) zwischen Verbindungsrohrleitungen der aufrechten Säule (1) und des Innenarms (3) angeordnet ist, ein unteres Ende des Bogens (6) und eine in der aufrechten Säule (1) angeordnete Rohrleitung durch einen ersten Niedertemperaturdrehverbinder (5-4) verbunden sind, und ein oberes Ende des Bogens (6) und die Rohrleitung des Innenarms (3) durch einen zweiten Niedertemperaturdrehverbinder (5-5) verbunden sind, der erste Niedertemperaturdrehverbinder (5-4) und die erste Drehverbindung (10) dasselbe Drehzentrum haben, und der zweite Niedertemperaturdrehverbinder (5-5) und die zweite Drehverbindung (20) dasselbe Drehzentrum haben; eine Drehantriebsvorrichtung (7) zwischen dem Zapfenkasten (2) und der aufrechten Säule (1) angeordnet ist, und die Drehantriebsvorrichtung (7) konfiguriert ist, eine Drehbewegung des Zapfenkastens (2) relativ zur aufrechten Säule (1) anzutreiben, ein Innenarmschwenkmechanismus (8) zwischen dem Innenarm (3) und dem Zapfenkasten (2) angeordnet ist und konfiguriert ist, eine Drehung des Innenarms (3) relativ zum Zapfenkasten (2) anzutreiben, der Außenarm (4) mit dem Innenarm (3) durch eine dritte Drehverbindung (30) verbunden ist, ein dritter Niedertemperaturdrehverbinder (5-6) zwischen Verbindungsrohrleitungen des Außenarms (4) und des Innenarms (3) angeordnet ist, der dritte Niedertemperaturdrehverbinder (5-6) und die dritte Drehverbindung (30) dasselbe Drehzentrum haben, eine Rohrleitung an einem vorderen Ende des Außenarms sequenziell mit einem vierten Niedertemperaturdrehverbinder (5-7), einem fünften Niedertemperaturdrehverbinder (5-8), der Notabkupplungsvorrichtung (5-2), einem sechsten Niedertemperaturdrehverbinder (5-9) und der Schnellverbindungsvorrichtung (5-3) verbunden ist, drei Niedertemperaturdrehverbinder, die Notabkupplungsvorrichtung (5-2) und die Schnellverbindungsvorrichtung (5-3) einen dreidimensionalen Verbinder am vorderen Ende des Außenarms bilden, und das Gegengewichtssystem zwischen dem Innenarm (3) und dem Außenarm (4) angeordnet ist, und das Gegengewichtssystem bewirkt, dass eine Symmetrieebene eines Gegengewichts immer parallel zu einer Symmetrieebene des Außenarms (4) ist.

3. Intelligentes LNG-Großkaliber-landbasiertes Be- und Entladesystem nach Anspruch 2, wobei das Gegengewichtssystem eine Gegengewichtsbaugruppe, eine Rolle (6-3), eine Gegengewichtsscheibe (6-4), eine Außenarmscheibe (6-5), ein Stahldrahtseil (6-6) und ein Gegengewichtsantriebsrad (6-7) umfasst, wobei
die Gegengewichtsbaugruppe fest mit einem Ende der Rolle (6-3) verbunden ist, ein anderes Ende der Rolle (6-3) mit einem unteren Ende des Innenarms (3) durch eine vierte Drehverbindung (40) verbunden ist, die Gegengewichtsscheibe (6-4) auf die Rolle (6-3) aufgeschoben ist, die Außenarmscheibe (6-5) mit einem Außenring der vierten Drehverbindung (40) verbunden ist, das Stahldrahtseil (6-6) zwischen der Gegengewichtsscheibe (6-4) und der Außenarmscheibe (6-5) verbunden ist, das Stahldrahtseil (6-6) an der Gegengewichtsscheibe (6-4) und der Außenarmscheibe (6-5) befestigt ist, eine Symmetrieebene der Gegengewichtsbaugruppe parallel zur Symmetrieebene des Außenarms (4) ist, und ein Außenarmschwenkmechanismus (9) am Innenarm (3) angeordnet ist und konfiguriert ist, eine Drehung der Gegengewichtsscheibe (6-4) anzutreiben.

4. Intelligentes LNG-Großkaliber-landbasiertes Be- und Entladesystem nach Anspruch 2 oder 3, wobei die Drehantriebsvorrichtung (7), der Innenarmschwenkmechanismus (8) und der Außenarmschwenkmechanismus (9) jeweils eine feste Basis (21), einen Antriebsölzylinder (22), bewegliche Rollen (23), eine angetriebene Scheibe (24) und ein Antriebsstahldrahtseil (25) umfassen, wobei der Antriebsölzylinder (22) ein doppeltwirkender Hydraulikzylinder ist, zwei Enden des Antriebsölzylinders (22) mit den beweglichen Rollen (23) verbunden sind, das Antriebsstahldrahtseil (25) an einem Ende mit der festen Basis (21) verbunden ist, dann um die bewegliche Rolle (23) an einem Ende um einen Halbkreis verläuft, um die angetriebene Scheibe (24) um einen Kreis und dann um die bewegliche Rolle (23) am anderen Ende um einen Halbkreis verläuft, und dann am anderen Ende an der festen Basis (21) befestigt ist, wobei
für die Drehantriebsvorrichtung (7) der Antriebsölzylinder (22) am Zapfenkasten (2) durch die feste Basis (21) befestigt ist, und die angetriebene Scheibe (24) mit einem Außenring der ersten Drehverbindung (10) verbunden ist; für den Innenarmschwenkmechanismus (8) der Antriebsölzylinder (22) am Zapfenkasten (2) durch die feste Basis (21) befestigt ist, und die angetriebene Scheibe (24) mit einem Außenring der zweiten Drehverbindung (20) verbunden ist; und für den Außenarmschwenkmechanismus (9) der Antriebsölzylinder (22) am Innenarm (3) durch die feste Basis (21) befestigt ist, und die angetriebene Scheibe (24) mit der Rolle (6-3) verbunden ist.

5. Intelligentes LNG-Großkaliber-landbasiertes Be- und Entladesystem nach Anspruch 2, wobei die Notabkupplungsvorrichtung (5-2) ein Niedertemperaturoberkugelventil (5-21), ein Niedertemperaturunterkugelventil (5-22), Ventilbügel (5-25), einen ersten Hydraulikzylinder (5-210), einen zweiten Hydraulikzylinder (5-211) und ein Hydrauliksystem, das konfiguriert ist, den ersten Hydraulikzylinder (5-210) und den zweiten Hydraulikzylinder (5-211) anzutreiben, umfasst, wobei ein Antriebsfestrahmen (5-212) am Niedertemperaturoberkugelventil (5-21) befestigt ist, und der erste Hydraulikzylinder (5-210) und der zweite Hydraulikzylinder (5-211) am Antriebsfestrahmen (5-212) befestigt sind, eine obere Schubstange (5-213) am ersten Hydraulikzylinder (5-210) angeordnet ist, und eine untere Schubstange (5-214) unterhalb der oberen Schubstange (5-213) angeordnet ist, ein Bruchflanschdichtring (5-23) zwischen dem Niedertemperaturoberkugelventil (5-21) und dem Niedertemperaturunterkugelventil (5-22) angeordnet ist, eine Bügelhalterung (5-24) am Niedertemperaturoberkugelventil (5-21) befestigt ist, und ein Ende jedes der zwei Ventilbügel (5-25) mit der Bügelhalterung (5-24) durch eine Drehwelle verbunden ist und andere Enden der zwei Ventilbügel durch eine Klemmstange (5-26) verbunden sind, jedes des Niedertemperaturoberkugelventils (5-21) und des Niedertemperaturunterkugelventils (5-22) mit einer Drehwippe (5-217) versehen ist, zwei Drehwippen (5-217) jeweils mit Ventilkerndrehwellen (5-215) des Niedertemperaturoberkugelventils (5-21) und des Niedertemperaturunterkugelventils (5-22) verbunden sind, der zweite Hydraulikzylinder (5-211) mit einem Ende der oberen Drehwippe (5-217) durch eine Drehwelle verbunden ist, eine Schubstange (13-1) fest mit jeder der oberen Schubstange (5-213) und der unteren Schubstange (5-214) an der Rückseite verbunden ist, die oberen und unteren Drehwippen (5-217) jeweils in Kontakt mit unteren Enden der oberen und unteren Schubstangen (13-1) sind, und ein Schubblock (5-218), der konfiguriert ist, den Klemmblock (5-26) zu schieben, zwischen der oberen Schubstange (5-213) und der unteren Schubstange (5-214) angeordnet ist.

6. Intelligentes LNG-Großkaliber-landbasiertes Be- und Entladesystem nach Anspruch 5, wobei das Hydrauliksystem der Notabkupplungsvorrichtung (5-2) ein Einwegventil (5-221), ein Dreistellungsvierwege-Elektroproportionalrichtungsventil (5-223), ein Zweiwegeausgleichsventil (5-224), ein Richtungsventil (5-227), ein Hydrauliksteuerungsrichtungsventil (5-228) und ein Zweistellungsvierwege-Magnetrichtungsventil (5-229) umfasst, wobei
das Einwegventil (5-221) an einem Einlass einer Hydraulikölressource eines Hydrauliksteuersystems angeordnet ist, ein externes Hydrauliköl Öl zu einem Anschluss P des Dreistellungsvierwege-Elektroproportionalrichtungsventils (5-223) durch das Einwegventil zuführt und Öl zu einem Anschluss T zurückführt, das Zweiwegeausgleichsventil (5-224) zwischen Großhohlraum- und Kleinhohlraumhydraulikschleifen des Dreistellungsvierwege-Elektroproportionalrichtungsventils (5-223) und des zweiten Hydraulikzylinders (5-211) angeordnet ist, eine Druckölquelle Öl durch einen Anschluss P des Zweistellungsvierwege-Magnetrichtungsventils (5-229) zuführt und Öl durch einen Anschluss T zurückführt, und das Richtungsventil (5-227) an der Großhohlraumhydraulikschleife des ersten Hydraulikzylinders (5-210) angeordnet ist, das Hydrauliksteuerungsrichtungsventil (5-228) zwischen einem großen Hohlraum des zweiten Hydraulikzylinders (5-211) und einem Rücköl des Systems montiert ist, und einen Ölanschluss K steuert, um sich mit der Großhohlraumschleife des ersten Hydraulikzylinders (5-210) zu verbinden, für einen Alarm erster Stufe arbeitet der zweite Hydraulikzylinder (5-211), um das Niedertemperaturoberkugelventil (5-21) zum Schließen anzutreiben, und treibt das Niedertemperaturoberkugelventil (5-21) zum Öffnen an, nachdem der Alarm freigegeben ist, wenn ein Alarm zweiter Stufe vom Alarm erster Stufe eintritt, treibt der erste Hydraulikzylinder (5-210) ferner das Niedertemperaturunterkugelventil (5-22) zum Schließen an und schiebt die Klemmstange (5-26), um die Ventilbügel (5-25) zu öffnen, und wenn direkt der Alarm zweiter Stufe eintritt, arbeiten der erste Hydraulikzylinder (5-210) und der zweite Hydraulikzylinder (5-211) gleichzeitig, um das Niedertemperaturoberkugelventil (5-21) und das Niedertemperaturunterkugelventil (5-22) gleichzeitig zum Schließen anzutreiben, und schieben die Klemmstange (5-26), um die Ventilbügel (5-25) zu öffnen.

7. Intelligentes LNG-Großkaliber-landbasiertes Be- und Entladesystem nach Anspruch 2, wobei die Schnellverbindungsvorrichtung (5-3) eine Verbindungsrohrleitung (5-32), eine Vielzahl von Führungsmechanismen (5-38) und eine Vielzahl von Pressmechanismen (5-317) umfasst, wobei ein Verbindungsflansch (5-31), der konfiguriert ist, sich mit dem Be- und Entladearm zu verbinden, an einem Ende der Verbindungsrohrleitung angeordnet ist, und ein Kupplungsflansch (5-33), der mit einer Dichtflanschplatte (5-34) verbunden ist, am anderen Ende der Verbindungsrohrleitung (5-32) angeordnet ist, und die Vielzahl von Führungsmechanismen (5-38) und die Vielzahl von Pressmechanismen (5-317) alle um den Kupplungsflansch (5-33) angeordnet sind.

8. Intelligentes LNG-Großkaliber-landbasiertes Be- und Entladesystem nach Anspruch 2, wobei der Niedertemperaturdrehverbinder einen Innenringflansch (5-51), einen Innenring (5-58), einen Außenring (5-59), einen Außenringflansch (5-518) und Kugeln (5-511) umfasst, wobei der Innenringflansch (5-51) fest mit einem oberen Ende des Innenrings (5-58) verbunden ist, und eine statische Dichtvorrichtung zwischen Kontaktendflächen des Innenringflanschs (5-51) und des Innenrings (5-58) angeordnet ist, der Außenring (5-59) außerhalb des Innenrings (5-58) aufgeschoben ist, eine ringförmige Gleitbahnbefestigungsnut zwischen dem Außenring und dem Innenring (5-58) gebildet ist, und eine Vielzahl von Kugeln (5-511) in der ringförmigen Gleitbahn angeordnet ist, eine dynamische Feuchtigkeitsdichtvorrichtung (5-57) zwischen Kontaktendflächen des Außenrings (5-59) und des Innenringflanschs (5-51) angeordnet ist, der Außenringflansch (5-518) fest mit einem unteren Ende des Außenrings (5-59) verbunden ist, eine statische Dichtvorrichtung zwischen Kontaktendflächen des Außenringflanschs (5-518) und des Außenrings (5-59) angeordnet ist, eine dynamische Dichtvorrichtung zwischen Kontaktendflächen des Außenringflanschs (5-518) und des Innenrings (5-58) angeordnet ist, der Innenringflansch (5-51) mit einem ersten Gasanschluss (5-520) versehen ist, und der Außenring (5-59) mit einem zweiten Gasanschluss (5-519) versehen ist, ein ringförmiger Hohlraum (5-580) in dem Innenring (5-58) gebildet ist, und der erste Gasanschluss (5-520), der ringförmige Hohlraum (5-580), ein Spalt zwischen dem Außenring (5-59) und dem Innenring (5-58), und der zweite Gasanschluss (5-519) in Verbindung stehen, um einen Gasspülkreislauf zu bilden.

9. Intelligentes LNG-Großkaliber-landbasiertes Be- und Entladesystem nach Anspruch 1, wobei das dreidimensionale visuelle Management-Subsystem umfasst:
ein datensynchronisiertes Echtzeit-Visualisierungsmodul, das konfiguriert ist, um Echtzeitdaten der Be- und Entladearm-Betriebsumgebung anzuzeigen, wobei die Be- und Entladearm-Betriebsumgebung den Be- und Entladearm selbst umfasst;
ein dreidimensionales Modellmodul, das konfiguriert ist, um ein dreidimensionales Modell der Be- und Entladearm-Betriebsumgebung proportional zu erstellen und anzuzeigen;
ein modellbasiertes digitales Antriebsmodul, das konfiguriert ist, um eine Verbindung zwischen dem dreidimensionalen Modell der Be- und Entladearm-Betriebsumgebung und der tatsächlichen Be- und Entladearm-Betriebsumgebung anzutreiben;
ein Videoüberwachungsmodul, das konfiguriert ist, um ein Echtzeitbild der Be- und Entladearm-Betriebsumgebung anzuzeigen;
ein Umgebungs- und Personalbetriebsmodul, das konfiguriert ist, um zu erkennen, ob eine aktuelle Be- und Entlade-Betriebsumgebung eine Betriebsbedingung erfüllt, und Betriebspersonal und Betriebssituationen zuzuteilen und aufzuzeichnen, wenn die Betriebsbedingung erfüllt ist; und
ein Kommunikationsmodul, das konfiguriert ist, um Datenkommunikation zwischen den Modulen in dem dreidimensionalen visuellen Management-Subsystem und zwischen dem dreidimensionalen visuellen Management-Subsystem und anderen Systemen zu realisieren.

10. Intelligentes LNG-Großkaliber-landbasiertes Be- und Entladesystem nach Anspruch 1, wobei das visuelle Erkennungspositionierungs-Subsystem umfasst:
eine Grobpositionierungseinheit, die konfiguriert ist, um vorläufig eine Grobpositionierung der Positions- und Lageinformationen des Zielflanschs auf dem Schiff durchzuführen; und
eine Feinpositionierungseinheit, die konfiguriert ist, um weiter eine Feinpositionierung der Positions- und Lageinformationen des Zielflanschs auf dem Schiff in Echtzeit basierend auf der Positionierung der Grobpositionierungseinheit durchzuführen, weiter konfiguriert ist, um ein Hindernis in dem Bewegungsprozess des Be- und Entladearms zu erkennen und die Positions- und Lageinformationen und Hindernissinformationen an das automatische Kupplungs-Subsystem zu übertragen, und weiter konfiguriert ist, um ein Alarmsignal auszulösen, wenn ein plötzliches Eindringen eines beweglichen Hindernisses in dem Bewegungsprozess des Be- und Entladearms erkannt wird.

11. Intelligentes LNG-Großkaliber-landbasiertes Be- und Entladesystem nach Anspruch 10, wobei die Grobpositionierungseinheit die Grobpositionierung der Positions- und Lageinformationen des Zielflanschs auf dem Schiff durch eine Infrarot-Laserlichtquelle und durch die folgenden spezifischen Prozesse realisiert:
Aussenden von Laserlicht durch die Infrarot-Laserlichtquelle zu einem Zielbereich, wo sich der Zielflansch auf dem Schiff befindet;
Durchführen einer Entfernungsmessung durch Messen der Übertragungszeit zwischen der Lichtquelle und dem Zielbereich, und Bestimmen einer Entfernung jedes Objekts in dem Zielbereich, und Zeichnen eines dreidimensionalen Tiefenbilds des Zielbereichs;
Extrahieren des Zielflanschs auf dem Schiff aus dem dreidimensionalen Tiefenbild entsprechend den bekannten Form- und Strukturmerkmalen des Zielflanschs auf dem Schiff, und Bestimmen von Positions- und Lageinformationen des Zielflanschs auf dem Schiff; und
Erfassen eines Bilds des Zielflanschs auf dem Schiff durch die Feinpositionierungseinheit durch eine Laser-3D-Sichtkamera in Kombination mit einem Triangulations-Entfernungsmessungsprinzip, um eine Echtzeit-Feinpositionierung der Positions- und Lageinformationen des Zielflanschs auf dem Schiff zu realisieren.

12. Intelligentes LNG-Großkaliber-landbasiertes Be- und Entladesystem nach Anspruch 1 oder 10, wobei das automatische Kupplungs-Subsystem die Positions- und Lageinformationen und Hindernissinformationen des Zielflanschs auf dem Schiff durch die folgenden spezifischen Prozesse auflöst:
Analysieren der Konfiguration des Be- und Entladearms durch ein D-H-Darstellungsverfahren, und Etablieren eines Positionskoordinatensystems von beweglichen Gelenken des Be- und Entladearms;
Durchführen einer Vorwärtskinematikanalyse und inversen Kinematiklösung entsprechend den Positions- und Lageinformationen des Zielflanschs auf dem Schiff;
Planen einer Bewegungsbahn des Be- und Entladearms entsprechend den Hindernissinformationen, die durch das visuelle Erkennungspositionierungs-Subsystem erfasst werden; und
Durchführen einer inversen Lösung, um einen erforderlichen Bewegungswinkelwert jedes Gelenks des Be- und Entladearms entsprechend der Bewegungsbahn des Be- und Entladearms zu erhalten.

## Revendications

1. Système intelligent de chargement et déchargement à terre de GNL de gros calibre, comprenant un bras de chargement et déchargement et une plate-forme intelligente de gestion et contrôle 3D, dans lequel
le bras de chargement et déchargement est configuré pour mettre en œuvre un accouplement automatique et un désaccouplement d'urgence entre un navire GNL et un passage GNL au niveau de réservoirs de stockage de terminal GNL ; et
la plate-forme intelligente de gestion et contrôle 3D est configurée pour mettre en œuvre une gestion et contrôle en ligne en temps réel sur un processus de chargement et déchargement du bras de chargement et déchargement,
dans lequel la plate-forme intelligente de gestion et contrôle 3D comprend
une couche d'acquisition de données configurée pour acquérir des données ;
une couche de transmission de données configurée pour transmettre les données acquises à une couche de données ;
la couche de données configurée pour stocker les données acquises ;
une couche d'application fonctionnelle et une couche d'affichage configurées pour réaliser des fonctions d'une gestion visuelle tri-dimensionnelle, d'un positionnement par reconnaissance visuelle, d'une résolution de position et accouplement automatique et d'une prédiction de fonctionnement et maintenance de sécurité ;
la couche d'affichage configurée pour publier et afficher des informations visuelles, et afficher un visuel dynamique d'un modèle, dans lequel
la couche d'application fonctionnelle comprend en outre un sous-système de gestion visuelle tri-dimensionnelle, un sous-système de positionnement par reconnaissance visuelle, un sous-système d'accouplement automatique, et un sous-système de prédiction de fonctionnement et maintenance de sécurité, dans lequel
le sous-système de gestion visuelle tri-dimensionnelle est configuré pour afficher une image et des informations de données d'un environnement de fonctionnement du bras de chargement et déchargement en temps réel, et est en outre configuré pour afficher un modèle tri-dimensionnel de l'environnement de fonctionnement du bras de chargement et déchargement et mettre en œuvre une liaison entre le modèle tri-dimensionnel et un environnement de fonctionnement du bras de chargement et déchargement réel ;
le sous-système de positionnement par reconnaissance visuelle est configuré pour positionner des informations de position et posture d'une bride cible sur un navire, et est en outre configuré pour détecter un obstacle dans un processus de déplacement du bras de chargement et déchargement et transférer les informations de position et posture et les informations d'obstacle à un sous-système d'accouplement automatique ;
le sous-système d'accouplement automatique est configuré pour résoudre les informations de position et posture et les informations d'obstacle de la bride cible sur le navire, acquérir une trajectoire de mouvement et une valeur d'angle de mouvement requise de chaque articulation d'un bras de chargement et déchargement marin pour mettre en œuvre un accouplement entre la bride d'accouplement du bras de chargement et déchargement et la bride cible sur le navire, et transférer la trajectoire de mouvement et les informations de valeur d'angle à un mécanisme de contrôle de mouvement du bras de chargement et déchargement ; et
dans lequel le sous-système de prédiction de fonctionnement et maintenance de sécurité est configuré pour prédire des données de sécurité futures de chaque composant selon des données de sécurité historiques de chaque composant dans un environnement de travail du bras de chargement et déchargement, formuler et mettre en œuvre un plan de fonctionnement et maintenance de sécurité selon les données de sécurité prédites, et afficher les données de sécurité prédites, le plan de fonctionnement et maintenance de sécurité et le résultat de fonctionnement et maintenance de sécurité ;
dans lequel le sous-système de prédiction de fonctionnement et maintenance de sécurité comprend :
un module de prédiction de défaut, configuré pour prédire des informations de défaut futures de chaque composant, incluant le type d'un défaut et le cycle du défaut, selon des données de défaut historiques du composant, et définir plusieurs périodes de surveillance de défaut selon le cycle ; un module de prédiction de tendance de détérioration, configuré pour prédire une tendance de détérioration du composant selon le cycle du défaut, déterminer une période où une valeur de tendance de détérioration est inférieure à un seuil prédéfini, et enregistrer la période comme une période de surveillance de tendance de détérioration ;
un module de prédiction de durée de vie, configuré pour prédire des informations de durée de vie de fonctionnement du composant actuellement utilisé selon des informations de durée de vie de fonctionnement historiques du composant utilisé, et définir une période de surveillance de durée de vie selon un point final de durée de vie ;
un module de surveillance de sécurité, configuré pour déclencher automatiquement le fonctionnement dans les périodes de surveillance de défaut et/ou la période de surveillance de tendance de détérioration et/ou la période de surveillance de durée de vie pour surveiller l'état de fonctionnement du composant en permanence, donner une alarme en temps opportun lorsque des facteurs d'insécurité se produisent et envoyer une instruction d'alerte précoce à un module de planification de maintenance de sécurité, où les facteurs d'insécurité incluent le défaut, la tendance de détérioration et la durée de vie de fonctionnement et sont dérivés d'une base de facteurs d'insécurité personnalisée par l'utilisateur correspondant à chaque composant, chaque facteur d'insécurité dans la base correspondant à plusieurs niveaux d'insécurité, et l'instruction d'alerte précoce inclut les facteurs d'insécurité et les niveaux d'insécurité correspondant à ceux-ci ;
un module de planification de maintenance de sécurité, configuré pour formuler un tableau de planification de maintenance de sécurité selon les informations d'instruction d'alerte précoce, le tableau de planification incluant des paramètres propres et des informations de position du composant, et des facteurs d'insécurité, des niveaux d'insécurité, un mode de pré-inspection, un temps de pré-inspection et un personnel de pré-inspection correspondant à ceux-ci, le mode de pré-inspection incluant maintenir et réparer le composant actuel, et remplacer les mêmes types de composants ou d'autres types de composants, et le mode de pré-inspection étant auto-défini selon les facteurs d'insécurité et les niveaux d'insécurité correspondant à ceux-ci ; et
un module d'exécution et d'enregistrement de maintenance de sécurité, configuré pour allouer des tâches de maintenance de sécurité selon le tableau de planification de maintenance de sécurité et mettre à jour le tableau de planification de maintenance de sécurité après chaque maintenance de sécurité, le tableau incluant des paramètres propres et des informations de position du composant, et un mode d'inspection, un temps d'inspection, un résultat d'inspection et un personnel d'inspection correspondant à ceux-ci.

2. Système intelligent de chargement et déchargement à terre de GNL de gros calibre selon la revendication 1, dans lequel le bras de chargement et déchargement comprend une colonne verticale (1), une boîte de tourillon (2), un bras intérieur (3), un bras extérieur (4), un système de canalisation basse température et un système de contre-poids, dans lequel une extrémité inférieure du bras intérieur (3) est connectée à la colonne verticale (1) par l'intermédiaire de la boîte de tourillon (2), la boîte de tourillon (2) est connectée à la colonne verticale (1) par l'intermédiaire d'un premier roulement d'orientation (10), le bras intérieur (3) est connecté à la boîte de tourillon (2) par l'intermédiaire d'un second roulement d'orientation (20), le système de canalisation basse température comprend une pluralité de connecteurs rotatifs basse température capables d'une rotation de 360°, un dispositif de désaccouplement d'urgence (5-2) capable de séparation active, un dispositif de connexion rapide (5-3) et une canalisation de connexion (5-1) ;
la canalisation de connexion (5-1) en acier inoxydable passe à travers la colonne verticale (1) et est connectée au dispositif de désaccouplement d'urgence (5-2) et au dispositif de connexion rapide (5-3) séquentiellement par l'intermédiaire du bras intérieur (3) et du bras extérieur (4), un coude (6) est disposé entre les canalisations de connexion de la colonne verticale (1) et du bras intérieur (3), une extrémité inférieure du coude (6) et une canalisation qui est disposée dans la colonne verticale (1) sont connectées par l'intermédiaire d'un premier connecteur rotatif basse température (5-4), et une extrémité supérieure du coude (6) et la canalisation du bras intérieur (3) sont connectées par l'intermédiaire d'un second connecteur rotatif basse température (5-5), le premier connecteur rotatif basse température (5-4) et le premier support d'orientation (10) ont un même centre de rotation, et le second connecteur rotatif basse température (5-5) et le second support d'orientation (20) ont un même centre de rotation ; un dispositif d'entraînement rotatif (7) est disposé entre la boîte de tourillon (2) et la colonne verticale (1), et le dispositif d'entraînement rotatif (7) est configuré pour entraîner un mouvement rotatif de la boîte de tourillon (2) par rapport à la colonne verticale (1), un mécanisme d'oscillation de bras intérieur (8) est disposé entre le bras intérieur (3) et la boîte de tourillon (2) et configuré pour entraîner la rotation du bras intérieur (3) par rapport à la boîte de tourillon (2), le bras extérieur (4) est connecté au bras intérieur (3) par l'intermédiaire d'un troisième support d'orientation (30), un troisième connecteur rotatif basse température (5-6) est disposé entre les canalisations de connexion du bras extérieur (4) et du bras intérieur (3), le troisième connecteur rotatif basse température (5-6) et le troisième support d'orientation (30) ont un même centre de rotation, une canalisation à une extrémité avant du bras extérieur est connectée séquentiellement à un quatrième connecteur rotatif basse température (5-7), un cinquième connecteur rotatif basse température (5-8), le dispositif de désaccouplement d'urgence (5-2), un sixième connecteur rotatif basse température (5-9) et le dispositif de connexion rapide (5-3), trois connecteurs rotatifs basse température, le dispositif de désaccouplement d'urgence (5-2) et le dispositif de connexion rapide (5-3) forment un connecteur tri-dimensionnel à l'extrémité avant du bras extérieur, et le système de contre-poids est disposé entre le bras intérieur (3) et le bras extérieur (4), et le système de contre-poids fait qu'un plan de symétrie d'un contre-poids soit toujours parallèle à un plan de symétrie du bras extérieur (4).

3. Système intelligent de chargement et déchargement à terre de GNL de gros calibre selon la revendication 2, dans lequel le système de contre-poids comprend un ensemble de contre-poids, un rouleau (6-3), une poulie de contre-poids (6-4), une poulie de bras extérieur (6-5), un câble métallique (6-6) et une roue d'entraînement de contre-poids (6-7), dans lequel
l'ensemble de contre-poids est connecté de manière fixe à une extrémité du rouleau (6-3), une autre extrémité du rouleau (6-3) est connectée à une extrémité inférieure du bras intérieur (3) par l'intermédiaire d'un quatrième support d'orientation (40), la poulie de contre-poids (6-4) est enfilée sur le rouleau (6-3), la poulie de bras extérieur (6-5) est connectée à une bague extérieure du quatrième support d'orientation (40), le câble métallique (6-6) est connecté entre la poulie de contre-poids (6-4) et la poulie de bras extérieur (6-5), le câble métallique (6-6) est fixé sur la poulie de contre-poids (6-4) et la poulie de bras extérieur (6-5), un plan de symétrie de l'ensemble de contre-poids est parallèle au plan de symétrie du bras extérieur (4), et un mécanisme d'oscillation de bras extérieur (9) est disposé sur le bras intérieur (3) et configuré pour entraîner la rotation de la poulie de contre-poids (6-4).

4. Système intelligent de chargement et déchargement à terre de GNL de gros calibre selon la revendication 2 ou 3, dans lequel le dispositif d'entraînement rotatif (7), le mécanisme d'oscillation de bras intérieur (8) et le mécanisme d'oscillation de bras extérieur (9) comprennent chacun une base fixe (21), un vérin hydraulique d'entraînement (22), des poulies mobiles (23), une poulie menée (24) et un câble métallique d'entraînement (25), dans lequel le vérin hydraulique d'entraînement (22) est un vérin hydraulique double effet, deux extrémités du vérin hydraulique d'entraînement (22) sont connectées aux poulies mobiles (23), le câble métallique d'entraînement (25) est connecté à la base fixe (21) à une extrémité, puis contourne la poulie mobile (23) à une extrémité par un demi-cercle, autour de la poulie menée (24) par un cercle et puis autour de la poulie mobile (23) à une autre extrémité par un demi-cercle, et puis est fixé à la base fixe (21) à une autre extrémité, dans lequel
pour le dispositif d'entraînement rotatif (7), le vérin hydraulique d'entraînement (22) est fixé sur la boîte de tourillon (2) par l'intermédiaire de la base fixe (21), et la poulie menée (24) est connectée à une bague extérieure du premier support d'orientation (10) ; pour le mécanisme d'oscillation de bras intérieur (8), le vérin hydraulique d'entraînement (22) est fixé sur la boîte de tourillon (2) par l'intermédiaire de la base fixe (21), et la poulie menée (24) est connectée à une bague extérieure du second support d'orientation (20) ; et pour le mécanisme d'oscillation de bras extérieur (9), le vérin hydraulique d'entraînement (22) est fixé sur le bras intérieur (3) par l'intermédiaire de la base fixe (21), et la poulie menée (24) est connectée au rouleau (6-3).

5. Système intelligent de chargement et déchargement à terre de GNL de gros calibre selon la revendication 2, dans lequel le dispositif de désaccouplement d'urgence (5-2) comprend une vanne à boisseau sphérique supérieure basse température (5-21), une vanne à boisseau sphérique inférieure basse température (5-22), des cerclages de vanne (5-25), un premier vérin hydraulique (5-210), un second vérin hydraulique (5-211), et un système hydraulique configuré pour entraîner le premier vérin hydraulique (5-210) et le second vérin hydraulique (5-211), dans lequel
un châssis fixe d'entraînement (5-212) est fixé sur la vanne à boisseau sphérique supérieure basse température (5-21), et le premier vérin hydraulique (5-210) et le second vérin hydraulique (5-211) sont fixés sur le châssis fixe d'entraînement (5-212), une tige de poussée supérieure (5-213) est disposée sur le premier vérin hydraulique (5-210), et une tige de poussée inférieure (5-214) est disposée au-dessous de la tige de poussée supérieure (5-213), un joint d'étanchéité de bride de rupture (5-23) est disposé entre la vanne à boisseau sphérique supérieure basse température (5-21) et la vanne à boisseau sphérique inférieure basse température (5-22), un support de cerclage (5-24) est fixé sur la vanne à boisseau sphérique supérieure basse température (5-21), et une extrémité de chacun des deux cerclages de vanne (5-25) est connectée au support de cerclage (5-24) par l'intermédiaire d'un arbre rotatif et d'autres extrémités des deux cerclages de vanne sont connectées par l'intermédiaire d'une tige de serrage (5-26), chacune de la vanne à boisseau sphérique supérieure basse température (5-21) et de la vanne à boisseau sphérique inférieure basse température (5-22) est pourvue d'un basculeur rotatif (5-217), deux basculeurs rotatifs (5-217) sont respectivement connectés à des arbres rotatifs de noyau de vanne (5-215) de la vanne à boisseau sphérique supérieure basse température (5-21) et de la vanne à boisseau sphérique inférieure basse température (5-22), le second vérin hydraulique (5-211) est connecté à une extrémité du basculeur rotatif d'extrémité supérieure (5-217) par l'intermédiaire d'un arbre rotatif, une tige de poussée (13-1) est connectée de manière fixe à chacune de la tige de poussée supérieure (5-213) et de la tige de poussée inférieure (5-214) à l'arrière, les basculeurs rotatifs supérieur et inférieur (5-217) sont respectivement en contact avec des extrémités inférieures des tiges de poussée supérieure et inférieure (13-1), et un bloc de poussée (5-218) configuré pour pousser le bloc de serrage (5-26) est disposé entre la tige de poussée supérieure (5-213) et la tige de poussée inférieure (5-214).

6. Système intelligent de chargement et déchargement à terre de GNL de gros calibre selon la revendication 5, dans lequel le système hydraulique du dispositif de désaccouplement d'urgence (5-2) comprend un clapet anti-retour (5-221), un distributeur directionnel électro-proportionnel à trois positions et quatre voies (5-223), un clapet d'équilibrage bi-directionnel (5-224), un distributeur directionnel (5-227), un distributeur directionnel à commande hydraulique (5-228) et un distributeur directionnel solénoïde à deux positions et quatre voies (5-229), dans lequel
le clapet anti-retour (5-221) est disposé sur une entrée d'une ressource d'huile hydraulique d'un système de commande hydraulique, une huile hydraulique externe fournit de l'huile à un orifice P du distributeur directionnel électro-proportionnel à trois positions et quatre voies (5-223) par l'intermédiaire du clapet anti-retour et retourne de l'huile à un orifice T, le clapet d'équilibrage bi-directionnel (5-224) est disposé entre des boucles hydrauliques de grande cavité et petite cavité du distributeur directionnel électro-proportionnel à trois positions et quatre voies (5-223) et le second vérin hydraulique (5-211), une source d'huile sous pression fournit de l'huile par l'intermédiaire d'un orifice P du distributeur directionnel solénoïde à deux positions et quatre voies (5-229) et retourne de l'huile par l'intermédiaire d'un orifice T, et le distributeur directionnel (5-227) est disposé sur la boucle hydraulique de grande cavité du premier vérin hydraulique (5-210), le distributeur directionnel à commande hydraulique (5-228) est monté entre une grande cavité du second vérin hydraulique (5-211) et une huile de retour du système, et contrôle un orifice d'huile K pour se connecter à la boucle de grande cavité du premier vérin hydraulique (5-210), pour une alarme de premier niveau, le second vérin hydraulique (5-211) fonctionne pour entraîner la vanne à boisseau sphérique supérieure basse température (5-21) à être fermée, et entraîner la vanne à boisseau sphérique supérieure basse température (5-21) à être ouverte après que l'alarme soit libérée, lors de l'entrée dans une alarme de second niveau à partir de l'alarme de premier niveau, le premier vérin hydraulique (5-210) entraîne en outre la vanne à boisseau sphérique inférieure basse température (5-22) à être fermée et pousse la tige de serrage (5-26) pour ouvrir les cerclages de vanne (5-25), et lors de l'entrée directe dans l'alarme de second niveau, le premier vérin hydraulique (5-210) et le second vérin hydraulique (5-211) fonctionnent en même temps pour entraîner la vanne à boisseau sphérique supérieure basse température (5-21) et la vanne à boisseau sphérique inférieure basse température (5-22) à être fermées en même temps, et pousser la tige de serrage (5-26) pour ouvrir les cerclages de vanne (5-25).

7. Système intelligent de chargement et déchargement à terre de GNL de gros calibre selon la revendication 2, dans lequel le dispositif de connexion rapide (5-3) comprend une canalisation de connexion (5-32), une pluralité de mécanismes de guidage (5-38) et une pluralité de mécanismes de pressage (5-317), dans lequel une bride de connexion (5-31) configurée pour se connecter au bras de chargement et déchargement est disposée à une extrémité de la canalisation de connexion, et une bride d'accouplement (5-33) connectée à une plaque de bride d'étanchéité (5-34) est disposée à une autre extrémité de la canalisation de connexion (5-32), et la pluralité de mécanismes de guidage (5-38) et la pluralité de mécanismes de pressage (5-317) sont tous disposés autour de la bride d'accouplement (5-33).

8. Système intelligent de chargement et déchargement à terre de GNL de gros calibre selon la revendication 2, dans lequel le connecteur rotatif basse température comprend une bride de bague intérieure (5-51), une bague intérieure (5-58), une bague extérieure (5-59), une bride de bague extérieure (5-518) et des billes (5-511), dans lequel la bride de bague intérieure (5-51) est connectée de manière fixe à une extrémité supérieure de la bague intérieure (5-58), et un dispositif d'étanchéité statique est disposé entre les faces d'extrémité de contact de la bride de bague intérieure (5-51) et de la bague intérieure (5-58), la bague extérieure (5-59) est enfilée à l'extérieur de la bague intérieure (5-58), une rainure de fixation de glissière annulaire est formée entre la bague extérieure et la bague intérieure (5-58), et une pluralité de billes (5-511) sont disposées dans la glissière annulaire, un dispositif d'étanchéité dynamique à l'humidité (5-57) est disposé entre les faces d'extrémité de contact de la bague extérieure (5-59) et de la bride de bague intérieure (5-51), la bride de bague extérieure (5-518) est connectée de manière fixe à une extrémité inférieure de la bague extérieure (5-59), un dispositif d'étanchéité statique est disposé entre les faces d'extrémité de contact de la bride de bague extérieure (5-518) et de la bague extérieure (5-59), un dispositif d'étanchéité dynamique est disposé entre les faces d'extrémité de contact de la bride de bague extérieure (5-518) et de la bague intérieure (5-58), la bride de bague intérieure (5-51) est pourvue d'un premier orifice de gaz (5-520), et la bague extérieure (5-59) est pourvue d'un second orifice de gaz (5-519), une cavité annulaire (5-580) est formée dans la bague intérieure (5-58), et le premier orifice de gaz (5-520), la cavité annulaire (5-580), un jeu entre la bague extérieure (5-59) et la bague intérieure (5-58), et le second orifice de gaz (5-519) sont en communication pour former une boucle de purge de gaz.

9. Système intelligent de chargement et déchargement à terre de GNL de gros calibre selon la revendication 1, dans lequel le sous-système de gestion visuelle tridimensionnelle comprend :
un module d'affichage visuel en temps réel synchronisé aux données, configuré pour afficher des données en temps réel de l'environnement de fonctionnement du bras de chargement et déchargement, l'environnement de fonctionnement du bras de chargement et déchargement comprenant le bras de chargement et déchargement lui-même ;
un module de modèle tridimensionnel, configuré pour construire et afficher un modèle tridimensionnel de l'environnement de fonctionnement du bras de chargement et déchargement en proportion ;
un module d'entraînement numérique basé sur modèle, configuré pour entraîner une liaison entre le modèle tridimensionnel de l'environnement de fonctionnement du bras de chargement et
déchargement et l'environnement de fonctionnement du bras de chargement et déchargement réel
un module de surveillance vidéo, configuré pour afficher une image en temps réel de l'environnement de fonctionnement du bras de chargement et déchargement ;
un module d'opération d'environnement et de personnel, configuré pour détecter si un environnement d'opération de chargement et déchargement actuel satisfait une condition d'opération, et allouer et enregistrer le personnel d'opération et les situations d'opération lorsque la condition d'opération est satisfaite ; et
un module de communication, configuré pour réaliser une communication de données entre les modules dans le sous-système de gestion visuelle tridimensionnelle, et entre le sous-système de gestion visuelle tridimensionnelle et d'autres systèmes.

10. Système intelligent de chargement et déchargement à terre de GNL de gros calibre selon la revendication 1, dans lequel le sous-système de positionnement par reconnaissance visuelle comprend :
une unité de positionnement grossier, configurée pour effectuer de manière préliminaire un positionnement grossier sur les informations de position et posture de la bride cible sur le navire ; et
une unité de positionnement fin, configurée pour effectuer en outre un positionnement fin sur les informations de position et posture de la bride cible sur le navire en temps réel basé sur le positionnement de l'unité de positionnement grossier, configurée en outre pour détecter un obstacle dans le processus de déplacement du bras de chargement et déchargement et transférer les informations de position et posture et les informations d'obstacle au sous-système d'accouplement automatique, et configurée en outre pour déclencher un signal d'alarme lors de la détection d'une invasion soudaine d'un obstacle mobile dans le processus de déplacement du bras de chargement et déchargement.

11. Système intelligent de chargement et déchargement à terre de GNL de gros calibre selon la revendication 10, dans lequel l'unité de positionnement grossier réalise le positionnement grossier des informations de position et posture de la bride cible sur le navire par l'intermédiaire d'une source laser infrarouge et par les processus spécifiques suivants :
émission, par la source laser infrarouge, de lumière laser vers une zone cible où la bride cible sur le navire est située ;
exécution d'une télémétrie en mesurant le temps de transmission entre la source lumineuse et la zone cible, et détermination d'une distance de chaque objet dans la zone cible, et dessin d'une image de profondeur tridimensionnelle de la zone cible ;
extraction de la bride cible sur le navire à partir de l'image de profondeur tridimensionnelle selon la forme et les caractéristiques de structure connues de la bride cible sur le navire, et détermination des informations de position et posture de la bride cible sur le navire ; et
acquisition, par l'unité de positionnement fin, d'une image de la bride cible sur le navire par l'intermédiaire d'une caméra visuelle laser 3D en combinaison avec un principe de télémétrie triangulaire pour réaliser un positionnement fin en temps réel des informations de position et posture de la bride cible sur le navire.

12. Système intelligent de chargement et déchargement à terre de GNL de gros calibre selon la revendication 1 ou 10, dans lequel le sous-système d'accouplement automatique résout les informations de position et posture et les informations d'obstacle de la bride cible sur le navire par les processus spécifiques suivants :
analyse de la configuration du bras de chargement et déchargement par une méthode de représentation D-H, et établissement d'un système de coordonnées de position des articulations mobiles du bras de chargement et déchargement ;
exécution d'une analyse cinématique directe et d'une solution cinématique inverse selon les informations de position et posture de la bride cible sur le navire ;
planification d'une trajectoire de mouvement du bras de chargement et déchargement selon les informations d'obstacle acquises par le sous-système de positionnement par reconnaissance visuelle ; et
exécution d'une solution inverse pour obtenir une valeur d'angle de mouvement requise de chaque articulation du bras de chargement et déchargement selon la trajectoire de mouvement du bras de chargement et déchargement.
